# EUROPÄISCHE PATENTSCHRIFT

(11) **EP 0 755 285 B1**
(45) Veröffentlichungstag und Bekanntmachung des Hinweises auf die Patenterteilung: **12.11.1997**
(21) Anmeldenummer: 95915059.0
(22) Anmeldetag: 13.04.1995
(51) Int. Cl.: A62C 27/00

(54) **SELBSTTRAGENDER KASTENAUFBAU FÜR EINSATZFAHRZEUGE, INSBESONDERE FEUERWEHRFAHRZEUGE**
INTEGRAL BODY AND FRAME FOR RESCUE VEHICLES, IN PARTICULAR FIRE FIGHTING CARS
CAISSE MONOCOQUE POUR VEHICULES D'INTERVENTION, NOTAMMENT FOURGONS DE POMPIERS

(30) Priorität: 13.04.1994 AT 768/94
(43) Veröffentlichungstag der Anmeldung: 29.01.1997
(73) Patentinhaber: ROSENBAUER INTERNATIONAL Aktiengesellschaft, 4060 Leonding (AT)
(72) Erfinder: GLATZMEIER, Alfred, A-4033 Linz (AT); HOCHDANINGER, Franz, A-4821 Lauffen (AT)
(74) Vertreter: Secklehner, Günter, Dr.
(86) Internationale Anmeldenummer: AT9500074
(87) Internationale Veröffentlichungsnummer: WO9528203

(56) Entgegenhaltungen:
- EP-A- 0 125 234
- DE-A- 2 043 794
- DE-A- 2 741 126
- DE-A- 3 517 290
- FR-A- 2 332 926
- GB-A- 2 081 331
- GB-A- 2 158 783
- US-A- 3 572 815
- US-A- 5 076 639

## Beschreibung

Die Erfindung betrifft einen selbsttragenden Kastenaufbau für Einsatzfahrzeuge, wie er im Oberbegriff des Patentanspruches 1 beschrieben ist.

Es sind bereits derartige Einsatzfahrzeuge bekannt - gemäß DE-C-35 17 290, bei welchen die Gerätekabine und/oder die Fahrerkabine sowie gegebenenfalls der Feuerlöschmittelbehälter als selbständige Module mit festgelegten Abmessungen ausgebildet sind und die wahlweise unterschiedlichen Module zu einem Einsatzfahrzeug zusammengebaut sind. Die einzelnen Module sind untereinander fest, jedoch auswechselbar verbunden, und es sind die Module oder Baugruppenmodule bzw. die Tragrahmen mit zusammenwirkenden Kupplungsteilen von gleichartigen Verbindungsvorrichtungen versehen. Bevorzugt weist jedes dieser Module einen Tragrahmen mit genormten Abmessungen in der Breite, der Höhe und der Tiefe auf, und es bilden diese Module containerartige Einheiten, die über die gleichartigen Kupplungs-und Verbindungsvorrichtungen miteinander und zu einem gesamten Kastenaufbau verbunden sind. Diese Art des Kastenaufbaues erlaubt einen raschen freizügigen Zusammenbau unterschiedlich ausgestatteter Ausrüstungskabinen. Es ist jedoch erforderlich, jedes Modul mit einem selbsttragenden Tragrahmen zu versehen, wodurch das Leergewicht eines derartigen Kastenaufbaues für ein Einsatzfahrzeug relativ hoch ist, sodaß deren Verwendung nur für spezielle Einsatzbedürfnisse, bei welchen es unter Umständen aufgrund von rasch wechselnden Einsatzbedingungen notwendig ist, diese Kastenaufbauten entsprechend den Einsatzbedürfnissen rasch unterschiedlich zusammenzustellen, Vorteile mit sich bringt.

Der vorliegenden Erfindung liegt die Aufgabe zugrunde, einen selbsttragenden Kastenaufbau für ein Einsatzfahrzeug, insbesondere ein Feuerwehrfahrzeug zu schaffen, welcher freitragend ausgebildet ist und eine große Vielfalt an Ausführungsvarianten für die Ausrüstungskabine erlaubt, die im Betrieb dann nicht mehr verändert werden.

Diese Aufgabe der Erfindung wird durch die Merkmale des kennzeichnenden Teils des Patentanspruches 1 gelöst. Vorteilhaft ist hierbei, daß durch die Herstellung eines freitragenden Kastenaufbaues und durch die Verwendung und die Zusammensetzung unterschiedlicher Blechelemente eine großzügige Variation für die Ausgestaltung des Kastenaufbaues unter einer Verwendung einer Vielzahl von Gleichteilen möglich ist und die bei einem derartigen Kastenaufbau ohnehin benötigten Unterteilungen gleichzeitig eine Tragfunktion übernehmen, sodaß ein Rahmentragwerk aus Formrohren eingespart werden kann. Damit ist es möglich, die aus dem PKW-Bau gewonnenen Erkenntnisse für derartige freitragenden Kabinen für die Herstellung komplexer Kastenaufbauten für Einsatz- bzw. Feuerwehrfahrzeuge zu verwenden, sodaß damit die Festigkeitsvorteile bei gleichzeitiger Gewichtsreduktion auch bei Lastkraftwagen nunmehr realisierbar sind. Dazu kommt, daß durch die Kombination des Horizontaltragelementes mit den Quertragelementen und den aus Blechprofilen gebildeten Diagonalstützelementen unter Verwendung entsprechend profilierter Blechbauteile eine fachwerkartige Tragkonstruktion erreicht werden kann, die auch höheren Verwindungskräften bei Geländefahrten widersteht und die Aufnahme auch schwerer Ausrüstungsgegenstände im Inneren des Kastenaufbaues an beliebigen Stellen ermöglicht. Gleichzeitig wird durch diese sinnvolle Kombination der einzelnen Tragelemente erreicht, daß im Inneren eines derartigen Kastenaufbaues mit gleichen bzw. artähnlichen Bauelementen ein Löschmittelbehälter integriert werden kann. Damit ist es möglich, dasselbe Aufbausystem für den Kastenaufbau sowohl für Rüstfahrzeuge als auch für Tanklöschfahrzeuge einzusetzen, wodurch die universelle Verwendbarkeit dieses Bauprinzips noch zusätzlich verstärkt werden kann.

Vorteilhaft ist auch eine Ausführungsform nach Patentanspruch 2, da durch die Ausgestaltung von Blechteilen, sei es nun aus Aluminium oder Stahl und deren sinnvolle Verbindung untereinander, nur aus diesen selbst ein freitragender Aufbau hergestellt werden kann.

Es ist aber auch eine Weiterbildung nach Patentanspruch 3 möglich, da damit auch ebenflächige Wabenelemente mit hoher Ausbeulfestigkeit und geringem Gewicht geschaffen werden können, wodurch die Integration, beispielsweise eines Flüssigkeitstanks in einen solchen Aufbau vereinfacht wird.

Durch eine Weiterbildung nach Patentanspruch 4 wird ohne einen großen Platzbedarf ein steifer Kastenaufbau erreicht, wodurch eine freizügige Innenraumgestaltung des Kastenaufbaues erzielbar ist.

Weiter ist aber auch eine Ausführungsvariante nach Patentanspruch 5 möglich, wodurch in einfacher Weise eine Verbindung zwischen einer Fahrerkabine und dem selbsttragenden Kastenaufbau möglich wird. Diese Ausgestaltung ermöglicht es weiters, in einem der Fahrerkabine zugeordneten Teil des selbsttragenden Kastenaufbaues Sitze oder Bänke für die Mannschaft anzuordnen und diesen Teil des Kastenaufbaues als Mannschaftskabine zu verwenden.

Eine Ausgestaltung nach Patentanspruch 6 ermöglicht einen einfachen Abschluß des Übergangsbereiches zwischen der Fahrerkabine und dem Kastenaufbau.

Eine Aussteifung des Horizontaltragelementes, sowie eine massive Verbindung zwischen den Quertragelementen und dem Horizontaltragelement bzw. der Dachtragplatte wird durch Merkmale im Patentanspruch 7 erzielt. Außerdem ermöglicht eine derartige Ausbildung eine großflächige Krafteinleitung von auf die Quertragelemente, beispielsweise beim Beschleunigen und Bremsen einwirkenden Schubkräften in das Horizontaltragelement bzw. die Dachtragplatte.

Eine weitere Ausgestaltung beschreibt Patentanspruch 8, durch die eine ausreichende Versteifung des Kastenaufbaues erzielt wird, wobei das Versteifungselement gleichzeitig das Diagonalstützelement bilden kann und daher auch ein Kastenaufbau mit maximaler Durchladefreiheit quer zur Fahrzeuglängsrichtung geschaffen werden kann.

Durch die Ausführungsvariante nach Patentanspruch 9 ist eine individuelle Anpassung der Festigkeitswerte der einzelnen Bereiche im Kastenaufbau einfach und kostengünstig erzielbar.

Dabei erweist sich eine Weiterbildung nach Patentanspruch 10 als vorteilhaft, da eine einfache Verbindung zwischen den Versteifungselementen und den zu versteifenden Teilen des Kastenaufbaues erzielt werden kann. Ein weiterer Vorteil liegt darin, daß dadurch auch ein vorgefertigter Kastenaufbau, falls erforderlich, in einzelnen Bereichen jederzeit nachträglich versteift und an unterschiedliche Beanspruchung angepaßt werden kann.

Für die Erzielung einer Grundsteifigkeit bzw. Grundfestigkeit eines Kastenaufbaues erweist sich eine Ausführungsvariante nach Patentanspruch 11 als vorteilhaft. Dadurch können die vorhandenen flächigen Blechelemente, ohne daß zusätzliche Bauteile und Verbindungsarbeiten notwendig sind, mit einer ausreichenden Knick- und Beugesteifigkeit ausgestattet werden.

Durch die Ausführungsform nach Patentanspruch 12 wird eine über die Länge des Kastenaufbaues gleichmäßige Aussteifung erzielt, wobei auch eine in etwa gleichmäßige Gewichtsaufteilung, bezogen auf die Hinterachse, in einfacher Weise erreicht werden kann.

Durch die Ausführungsform nach Patentanspruch 13 ist es weiters möglich, eine ausreichende Versteifung der Rückwand des Kastenaufbaues zu erzielen und eine ebenflächige Ausbildung derselben zu ermöglichen, wobei gleichzeitig auch im Bereich der Heckwand das gleiche Konstruktionsprinzip wie im übrigen Teil des Kastenaufbaues verwendet werden kann.

Von Vorteil ist aber auch eine Ausführungsvariante nach Patentanspruch 14, da dadurch zusätzliche Versteifungselemente im Bereich der Stirnkanten der Quertragelemente eingespart werden können, da die für die Rolladenanordnungen benötigten Seitenführungsleisten für diesen Zweck eingesetzt werden können.

Eine zusätzlich Versteifung der Quertragelemente kann dann in vielen Fällen eingespart werden, wenn diese gemäß Patentanspruch 15 ausgebildet sind. Dazu kommt, daß im Anschluß an diese nutförmig durchgesetzten Führungs- bzw. Verstärkungsbereiche auch eine Unterteilung der Quertragelemente möglich ist, sodaß diese auch aus mehreren Einzelteilen zu einem gesamten Bauteil zusammengefügt werden können.

Durch die Ausbildung nach Patentanspruch 16 wird in einfacher Weise ein gleichartiges Befestigen bzw. Einschieben von Vertikaltrennelementen zur Unterteilung des Kastenaufbaues in unterschiedliche Bereiche erzielt. Vor allem dann, wenn die Seitenflächen der nutförmigen Führungs- bzw. Verstärkungsbereiche aufeinander zugerichtet sind, wird eine Abstützung der Vertikaltrennelemente in den Quertragelementen erheblich vereinfacht, und es können in diesem Bereich durch die Führung der Vertikaltrennelemente in den nutförmigen Vertiefungen hohe Seitenkräfte in die Quertragelemente eingeleitet werden. Damit ist diese Ausführungsform besonders für die Integration eines Tanks in den Kastenaufbau geeignet.

Durch die weitere Ausgestaltung nach Patentanspruch 17 können die den formstabilen Führungs- bzw. Verstärkungsbereichen benachbarten Bereiche des Quertragelementes ebenfalls mit einer höheren Formstabilität versehen werden, wobei die Fortsätze gleichzeitig zur Herstellung von entsprechend steifen Verbindungsknoten zwischen dem Quertragelement und der Boden- bzw. Dachtragplatte verwendet werden können.

Dabei erweist sich weiters eine Ausführungsvariante nach Patentanspruch 18 als vorteilhaft, da dadurch die Quertragelemente in ihrer Einbaulage einfacher kippsicher gehalten werden können und dadurch der Befestigungs- und Montageablauf vereinfacht werden kann.
Durch eine weitere Ausgestaltung nach Patentanspruch 19 können die Vertikaltrennelemente die Funktion des Diagonalstützelementes übernehmen, sodaß sich gesonderte Anordnungen von Diagonalstützelementen erübrigen.

Vor allem kann durch eine Weiterbildung nach Patentanspruch 20 auch eine Verbindung zwischen den Vertikaltrennelementen und den Quertragelementen erfolgen, die beispielsweise bei einer elastischen Kleberverbindung eine gewisse Nachgiebigkeit und Relativbewegung zwischen diesen einzelnen Elementen, vor allem bedingt durch Wärmedehnungen oder dgl., ausgleichen kann.

Die weitere Ausführungsvariante nach Patentanspruch 21 ermöglicht eine universelle Anpassung der Ausbildung der Verbindung zwischen den einzelnen Quertragelementen, da eine Mischung der unterschiedlich geformten Vertikaltrennelemente aufgrund eines entsprechenden Höhenrasters jederzeit möglich ist.

Durch die Merkmale nach Patentanspruch 22 wird eine ausreichende Grundsteifigkeit eines aus mehreren Vertikaltrennelementen hergestellten Bauteils, also beispielsweise der Seitenwände eines Tankbehälters oder einer Trennwand, ohne zusätzliche Verstärkungselemente erreicht.

Um eine noch höhere Flächenbelastbarkeit der Vertikaltrennelemente zu erzielen, können diese zusätzlich mit Versteifungselementen nach Patentanspruch 23 versehen sein, wobei es dann vorteilhaft ist, Versteifungselemente gemäß den Angaben im Patentanspruch 24 zu verwenden.

Durch die Ausführungsvariante nach Patentanspruch 25 kann auch bei entsprechend großen Spannweiten zwischen zwei Quertragelementen eine ausreichende Steifigkeit einer durch Vertikaltrennelemente gebildeten Zwischenwand erzielt werden.

Von Vorteil ist auch eine Weiterbildung nach Patentanspruch 26, da dadurch auch eine exakte Positionierung zweier einander unmittelbar benachbarter Vertikaltrennelemente sichergestellt werden kann, sodaß es auch bei unterschiedlich starken Belastungen, wie dies beispielsweise bei einer in einem Tankbehälter während der Fahrt hin- und herschlagenden Flüssigkeit der Fall ist, eine dichte Verbindung zwischen den Vertikaltrennelementen sichergestellt werden kann.

Zur Verbindung einander benachbarter Vertikaltrennelemente und deren fixer Positionierung zueinander ist es dann vorteilhaft, eine Ausbildung gemäß den Patentansprüchen 27 und 28 zu wählen.

Die Herstellung des Horizontaltragelementes wird durch eine Ausführungsvariante gemäß Patentanspruch 29 erleichtert.

Eine steife und hohe kräfteübertragende Verbindung der Einzelteile eines Horizontaltragelementes kann durch die Weiterbildung nach Patentanspruch 30 erreicht werden.

Vorteilhaft ist aber auch eine Ausgestaltung nach Patentanspruch 31, da dadurch das Horizontaltragelement gleichzeitig die Funktion eines Hilfsrahmens für den Kastenaufbau übernehmen kann, wodurch die auf den Kastenaufbau einwirkenden Verbindungsbeanspruchungen zusätzlich verringert werden können.

Als bevorzugt erweist sich auch eine Ausbildung eines Knotenversteifungselementes, wie es in den Patentansprüchen 32 bis 34 gekennzeichnet ist, da neben einer hohen Steifigkeit des Knotenversteifungselementes auch eine rasche und kostengünstige Verbindung zwischen dem Horizontaltragelement und dem Fahrgestellrahmen des Fahrzeuges hergestellt werden kann.

Eine für hohe Verwindungsbeanspruchungen und hohe Schwingungsbeanspruchungen günstige Verbindungstechnologie wird durch die Ausgestaltung nach Patentanspruch 35 erreicht, da dadurch hochfrequente Schwingungen durch die gleichbleibende Elastizität der Kleberschichten aufgefangen und gedämpft werden können, ohne daß die Verbindungsstellen zerstört werden.

Von Vorteil ist aber auch eine Verbindungstechnologie` wie sie im Patentanspruch 36 unter Schutz gestellt ist, da damit auch über längere Betriebsdauer und bei hohen Außentemperaturen eine bleibende starre Befestigung erreicht werden kann, die geringeren Alterungs- und Verformungsbeanspruchungen, insbesondere durch Kriechen unterworfen ist.

Eine einfache Abtrennung des Kastenaufbaues in einer horizontalen Ebene kann durch die Ausgestaltungen der Patentansprüche 37 und/oder 38 erzielt werden.

Die Weiterbildungen nach den Patentansprüchen 39 und/oder 40 erlauben eine vielfältige Ausgestaltung des Innenraums eines derartigen Kastenaufbaues für Tanks mit unterschiedlichem Fassungsvermögen.

Weitere vorteilhafte Ausgestaltungen der Horizontaltragelemente sind in den Patentansprüchen 41 bis 43 beschrieben.

Eine ausreichende Versteifung mit einem geringen Mehraufwand an Bauteilen wird durch die Ausführungsvariante nach Patentanspruch 44 erreicht, da das zur verwindungssicheren Aufnahme der Rolläden verwendbare Längsstützelement gleichzeitig zur Versteifung einer zwar selbsttragenden aber nicht freitragenden Dachtragplatte verwendet werden kann.

Ein einfacher Aufbau der Befestigung der Fahrerkabine und des Kastenaufbaues wird durch die Ausbildung nach Patentanspruch 45 erreicht, da bei einer derartigen Ausbildung eine Änderung und Umkonstruktion der meist federnden Verbindung und Aufhängung der Fahrerkabine am Fahrgestellrahmen nicht erforderlich ist.

Vorteilhaft ist auch eine Ausgestaltung nach Patentanspruch 46, da damit eine Überbeanspruchung eines umlaufenden elastischen Verbindungselementes zwischen der Fahrerkabine und der Mannschaftskabine auch bei starken Relativbewegungen zueinander verhindert werden kann. Außerdem wird dadurch im Stillstand eine vorbestimmte Relativlage zwischen der Fahrerkabine und der Mannschaftskabine sichergestellt, sodaß auch bei langen Stehzeiten, wie dies bei Einsatzfahrzeugen insbesondere der Feuerwehr der Fall ist, keine bleibenden Verformungen des Verbindungselementes eintreten können, die die Dichtheit der einzelnen Teile nachteilig beeinflussen können.

Vorteilhaft ist auch eine Ausgestaltung nach Patentanspruch 47, da dadurch eine flächige Verbindung auch bei geringen Verstellwegen und eine räumliche Verlagerung des Fahrerhauses zum Kastenaufbau erzielbar ist.

Vorteilhaft ist es bei einer Ausbildung nach Patentanspruch 48, daß mittels der Randleiste das Verbindungselement über eine entsprechende Halteleiste übergestülpt werden kann und damit ein feuchtigkeitsdichter Abschluß zwischen dem Kastenaufbau und der Fahrerkabine auch bei extrem starken Relativverlagerung zwischen den beiden Teilen sichergestellt werden kann.

Durch die Weiterbildung nach Patentanspruch 49 wird erreicht, daß sowohl während des Fahrbetriebes als vor allem aber auch im Stillstand eine selbsttätige Ausrichtung der Fahrerkabine und der Mannschaftskabine in eine vorbestimmte Neutrallage erzielt wird, sodaß unerwünschte Verspannungen des Verbindungselementes und damit eventuell einhergehende Undichtheiten im Übergangsbereich zwischen der Fahrerkabine und dem Kastenaufbau vermieden werden können.

Vorteilhaft ist auch eine Ausgestaltung nach Patentanspruch 50, da dadurch bei räumlichen Verlagerungen durch die elastische Verformung eines oder beider Führungs- bzw. Dämpfungselemente die Auslenkbewegung gedämpft wird und eine selbsttätige Rückstellung in die Neutrallage erfolgt.

Durch die Weiterbildung nach Patentanspruch 51 kann auch die Relativbewegung zwischen der Fahrerkabine und der Mannschaftskabine in Fahrzeuglängsrichtungdurch das Auflaufen der konischen Flächen des inneren und äußeren Führungs- bzw. Dämpfungselementes begrenzt werden.

Durch eine weitere Ausbildung nach Patentanspruch 52 wird erreicht, daß zwischen den Mannschaften in der Fahrerkabine und der Mannschaftskabine eine für Einsatzfahrzeuge sehr wichtige Sprechverbindung sowie der persönliche Kontakt gegeben ist, da dies erfahrungsgemäß bei der Anfahrt zum Einsatzort einen erheblichen Abbau der bei der Anfahrt zum Einsatz vorhandenen nervlichen Anspannung der Mannschaft ermöglicht.

Vorteilhaft ist auch eine Anordnung der Aufstiegstreppen nach Patentanspruch 53, da dadurch auch bei einer hohen Lage der Mannschaftskabine, die sich durch die hohe Rahmenhöhe und die vorgeschriebenen Geländefahreigenschaften solcher Einsatzfahrzeuge ergeben, auch mit schweren Geräten am Rücken, beispielsweise mit einem Atemschutzgerät, das Aus- und Einsteigen in die Mannschaftskabine erheblich erleichtert wird.

Durch eine Ausgestaltung nach Patentanspruch 54 wird erreicht, daß der innerhalb der Außenumgrenzung und der Türanordnung liegende Tiefraum der durch die entsprechende Ausgestaltung des Horizontaltragelementes geschaffen wird, zur Anordnung der Aufstiegstreppe genutzt werden kann.

Vorteilhaft ist auch eine Ausführungsvariante nach Patentanspruch 55, da dadurch auch Kastenaufbauten unter Verwendung der erfindungsgemäßen Vorteile herstellbar sind, die keine vollflächige Unterteilung des Kastenaufbaues erfordern.

Die Ausbildung nach Patentanspruch 56 ermöglicht es in einfacher Weise, innerhalb eines derartigen Kastenaufbaues, der baukastenartig aus möglichst vielen gleichartigen Bauteilen zusammengesetzt ist, speziell geformte Bauteile einzusetzen, die für die Befestigung und Anordnung vorbestimmbarer Ausrüstungsgegenstände bereits entsprechend vorbereitet sind, sodaß umfangreiche Einbauten von Versteifungs- und Verstärkungselementen für die Lagerung von schweren Ausrüstungsgegenständen, wie beispielsweise Pumpen und dgl. eingespart werden können.

Durch die Ausführungsform nach Patentanspruch 57 wird eine einfache Herstellung des Horizontaltragelementes auch bei großen Aufbaulängen ermöglicht, wobei eine hohe Steifigkeit und Festigkeit vor allem im Verbindungsbereich zwischen den Quertragelementen und dem Horizontaltragelement erreicht werden kann.

Vorteilhaft für die Befestigung, insbesondere der Schwenkachse eines Schwenkfaches bzw. von sonstigen Ausrüstungsgegenstanden sind die Merkmale nach den Patentansprüchen 58 und 59.

Von Vorteil ist bei der Ausgestaltung nach Patentanspruch 60, daß auch schwere Ausrüstungen und die diese aufnehmenden, auf Ausbeulung bzw. Verformung beanspruchte Bauelemente des Kastenaufbaues ohne einer wesentlichen Verstärkung derselben im Kastenaufbau gelagert werden können, da die meist punktuell auftretenden Kräfte über die Profile bzw. Randleisten über eine größere Fläche in die meist dünnwandigen Blechteile des Kastenaufbaues eingeleitet werden können.

Die Erfindung wird im nachfolgenden anhand der in den Zeichnungen dargestellten Ausführungsbeispiele näher erläutert.

Es zeigen:
- Fig. 1: ein Einsatzfahrzeug mit einem erfindungsgemäßen Kastenaufbau als Phantombild in vereinfachter, schematischer, schaubildlicher Darstellung;
- Fig. 2: das Einsatzfahrzeug mit einem erfindungsgemäßen Kastenaufbau in Seitenansicht bei teilweise geöffneten Türanordnungen in den Seitenwänden;
- Fig. 3: das Einsatzfahrzeug nach Fig. 2 in Draufsicht, teilweise geschnitten;
- Fig. 4: das Einsatzfahrzeug nach Fig. 2 und 3 in Stirnansicht, geschnitten, gemäß den Linien IV-IV in Fig. 3;
- Fig. 5: eine Ausführungsvariante des erfindungsgemäßen Kastenaufbaues in Draufsicht, geschnitten, gemäß den Linien V-V in Fig. 4 und vereinfachter, schematischer Darstellung;
- Fig. 6: einen Teil des Einsatzfahrzeuges im Bereich des Übergangs- und Dichtelementes zwischen der Fahrerkabine und dem Kastenaufbau in Seitenansicht und vereinfachter, schematischer Darstellung;
- Fig. 7: das Verbindungselement zwischen der Fahrerkabine und dem Kastenaufbau in Stirnansicht, geschnitten, gemäß den Linien VII-VII in Fig. 6;
- Fig. 8: das Verbindungselement im Bereich der Abdeckung für die Betriebsmittelanzeigen in Stirnansicht, geschnitten, gemäß den Linien VIII-VIII in Fig. 6;
- Fig. 9: das Einsatzfahrzeug in Stirnansicht mit gegenüber dem Kastenaufbau relativ verlagerter Fahrerkabine in vereinfachter schematischer Darstellung;
- Fig. 10: eine Knotenverbindung zwischen einem Quertragelement und der Dachtragplatte in vereinfachter, schematischer, schaubildlicher Darstellung;
- Fig. 11: eine andere Ausführungsform des Kastenaufbaues im Bereich eines Löschmittelbehälters in Stirnansicht, geschnitten;
- Fig. 12: die Anordnung von Schwallwänden in einem durch Teile des erfindungsgemäßen Kastenaufbaues gebildeten Löschmittelbehälter in schaubildlicher Darstellung;
- Fig. 13: eine Eckknotenausbildung des Horizontaltragelementes zwischen der Basis und den Schenkeln derselben in vereinfachter, schaubildlicher Darstellung, teilweise geschnitten;
- Fig. 14: eine weitere Ausführungsvariante des Horizontaltragelementes in vereinfachter, schaubildlicher Darstellung, teilweise geschnitten;
- Fig. 15: eine Eckknotenausbildung zwischen der Dachtragplatte und den Quertragelementen in vereinfachter, schaubildlicher Darstellung, teilweise geschnitten;
- Fig. 16: ein Vertikaltrennelement in Seitenansicht;
- Fig. 17: das Vertikaltrennelement gemäß Fig. 16 in Stirnansicht, geschnitten, gemäß den Linien XVII-XVII in Fig. 16;
- Fig. 18: eine mögliche Ausführungsvariante eines Quertragelementes mit den zugehörigen Einbauteilen in schaubildlicher, schematisch vereinfachter Explosivdarstellung.
- Fig. 19: eine Ausführungsvariante eines Formbauteils für einen erfindungsgemäßen Kastenaufbau in schaubildlicher Darstellung;
- Fig. 20: eine Ausführungsvariante eines Formbauteils für einen erfindungsgemäßen Kastenaufbau in schaubildlicher Darstellung;
- Fig. 21: eine Ausführungsvariante eines Formbauteils für einen erfindungsgemäßen Kastenaufbau in schaubildlicher Darstellung;
- Fig. 22: einen Teil eines Kastenaufbaues in Stirnansicht, geschnitten und vereinfachter, vergrößerter Darstellung;
- Fig. 23: einen Teil des erfindungsgemäßen Kastenaufbaues nach Fig. 22 in Draufsicht und vereinfachter schematischer Darstellung, geschnitten, gemäß den Linien XXIII-XXIII in Fig. 22.

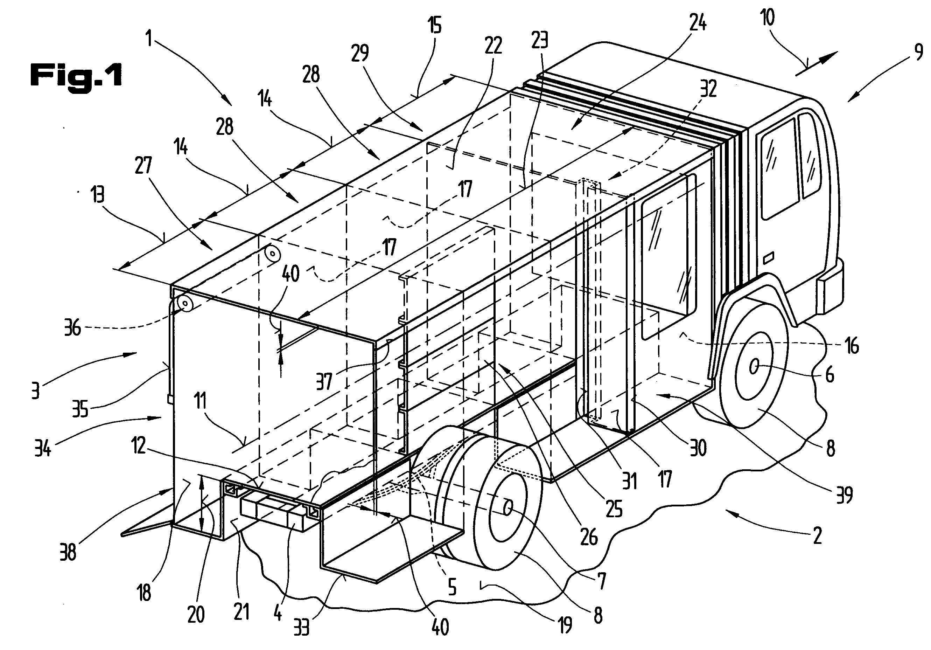

In Fig. 1 ist ein Einsatzfahrzeug 1 gezeigt, das im vorliegenden Fall als Feuerwehrfahrzeug ausgebildet ist. Zur Aufnahme von nicht näher dargestellten Rettungs- und/oder Löschvorrichtungen und gegebenenfalls von Löschmitteln oder Löschmittelpumpen ist auf einem Fahrzeugchassis 2 ein Kastenaufbau 3 angeordnet. Das Fahrzeugchassis 2 wird durch einen Fahrzeugrahmen 4 gebildet, welcher über entsprechende Federelemente 5 auf Fahrachsen 6, 7 mit Rädern 8 abgestützt ist und auf dem auch eine Fahrerkabine 9 befestigt ist.

Der Kastenaufbau 3 ist auf der von der Fahrtrichtung - Pfeil 10 - abgewendeten Richtung der Fahrerkabine 9 entlang einer Fahrzeuglängsachse 11 am Fahrzeugrahmen 4 angeordnet und besteht aus einem Horizontaltragelement 12 und zumindest drei in Fahrtrichtung - Pfeil 10 - in Abständen 13,14,15 hintereinander angeordneten Quertragelementen 16,17 oder 18.

Das Horizontaltragelement 12 weist in Richtung einer Aufstandsfläche 19 um eine Länge 20 vorragende Schenkel 21 auf, die einen U-profilförmigen Querschnitt bilden.

Das Horizontaltragelement 12 sowie auch die Quertragelemente 16 bis 18 bestehen aus Blechteilen, insbesondere aus Stahl und/oder Aluminium.

Auf den Quertragelementen 16 bis 18 ist gegenüber der Aufstandsfläche 19 eine Dachtragplatte 22 aufgesetzt. Diese Dachtragplatte 22 und/oder das Horizontaltragelement 12 verbinden die Quertragelemente 16 bis 18 und bilden über eine Aufbaulänge 23 ein Längsstützelement 24.

Durch zusätzliche Diagonalstützelemente 25, die durch Vertikaltrennelemente 26, beispielsweise plattenförmige bzw. fachbodenartig ausgebildete Blechelemente in Fahrtrichtung - Pfeil 10 - bzw. zur Fahrzeuglängsachse 11, also in Längsrichtung des Fahrzeugrahmens 4, bevorzugt sich parallel erstreckend zwischen den Quertragelementen 16 bis 18 angeordnet sind, wird eine weitere Erhöhung der Stabilität des Kastenaufbaues 3 erreicht.

Dadurch wird nun ein freitragender Kastenaufbau 3 geschaffen, der beispielsweise entsprechend einer vorgefertigten Kipperwanne jederzeit auf den Fahrzeugrahmen 4 aufgesetzt bzw. von diesem aufgenommen werden kann.

Das heißt, dieser nur im wesentlichen aus Blechelementen gebildete Kastenaufbau 3 ist eigensteif und vermag sowohl das Eigengewicht verwindungs- und verformungsfrei aufzunehmen, als auch die durch die Beladung entstehenden Vertikallasten bzw. Belastungen zu übernehmen und über entsprechend vordefinierte Abstützbereiche auf den Fahrzeugrahmen 4 zu übertragen.

Ein weiterer Vorteil dieser Lösung liegt darin, daß durch die Anordnung der Quertragelemente 16 bis 18 gleichzeitig eine Unterteilung des Kastenaufbaues 3 in nebeneinander angeordnete Ausrüstungskästen bzw. -abteile 27, 28 bzw. eine Mannschaftskabine 29 möglich ist.

Dabei bestehen die einzelnen Bauteile dieses Kastenaufbaues 3, wie das Horizontaltragelement 12, die Quertragelemente 16 bis 18 sowie die Dachtragplatte 22 und die Vertikaltrennelemente 26, aus Blechprofilen bzw. durch entsprechend abgekantete Bereiche 30 bzw. Durchsetzungen 31 gebildete Führungs- bzw. Verstärkungsbereiche 32 oder mit diesen verbundenen weiteren Blechprofilen 33 versteiften, ebenflächigen Blechzuschnitten.

Jeder dieser zwischen den einzelnen Quertragelementen 16 bis 18 ausgebildete Ausrüstungskasten bzw. -abteil 27, 28 kann über eine einzige Türanordnung 34, beispielsweise einen Rolladen 35, dessen Lager- und Antriebsvorrichtung 36 in einem abgekanteten Längsbereich 37 verdeckt ist, zugänglich sein.

Es ist aber auch selbstverständlich möglich, jeden Ausrüstungskasten bzw. -abteil 27, 28 durch mehrere zur Fahrzeuglängsachse 11 bzw. in Fahrtrichtung - Pfeil 10 - nebeneinander im Bereich einer der beiden Seitenwände 38, 39 angeordnete Türanordnungen 34 zu bilden.

Durch diese miteinander verwindungssteif verbundenen Profile bzw. Blechprofile oder ebenflächigen Blechelemente mit ihren abgekanteten Bereichen 30 bzw. Durchsetzungen 31 oder Verstärkungsrippen bzw. die Verbindung mit entsprechenden durch Kantvorgänge oder sonstigen hergestellten Profilen, übernehmen diese nicht nur die Abtrennung bzw. Verteilung zwischen einer Mannschaftskabine 29 bzw. Ausrüstungskästen bzw. -abteilen 27 und 28, sondern die Längs-, Höhen- und Querversteifungen des Kastenaufbaues 3, sodaß auf ein Tragrohrgerippe bzw. auf ein Fachwerkrahmengestell verzichtet werden kann. Vor allem ist die Verwindungssteifigkeit gegebenenfalls auch vorteilhaft, daß die einzelnen Bauelemente, wie die Quertragelemente 16 bis 18, das Horizontaltragelement 12 oder die Dachtragplatte 22 in durchgesetzten bzw. abgewendeten Bereichen übergreifen bzw. überdecken, wodurch die Verwindungssteifigkeit gegeben ist und die Einleitung von Zug- bzw. Druckkräften auch bei dünnen Wandstärken 40 dieser Bauteile durch die Verteilung der einzuleitenden Kräfte über große Flächen übertragen werden können.

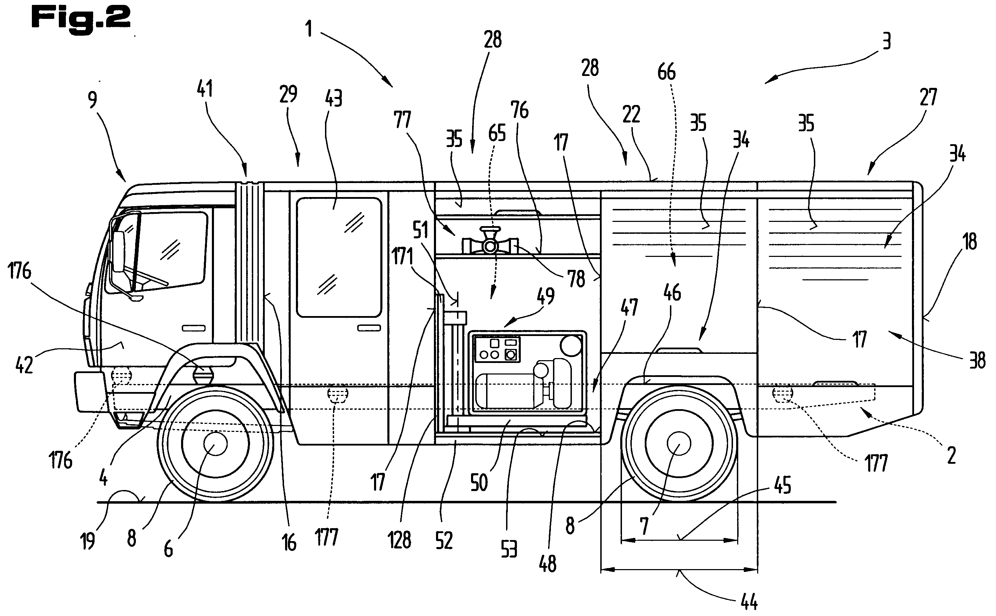

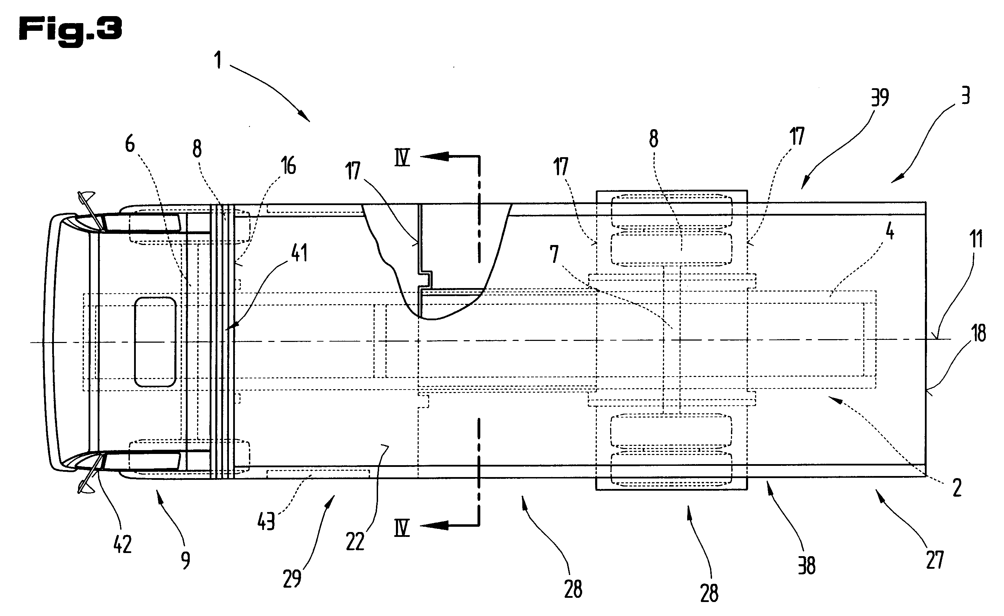

In den Fig. 2 bis 5 ist eine Ausführungsvariante eines Einsatzfahrzeuges 1 dargestellt, welches wiederum aus einem Fahrzeugchassis 2 mit zwei Fahrachsen 6 und 7, die sich über Räder 8 auf der Aufstandsfläche 19 abstützen und einer Fahrerkabine 9 sowie einem Kastenaufbau 3 besteht.

Der Kastenaufbau 3 umfaßt eine Mannschaftskabine 29 sowie drei in Richtung der Fahrzeuglängsachse 11 hintereinander angeordnete Ausrüstungskästen bzw. - abteile 27 und 28. Jeder dieser Ausrüstungskästen bzw. -abteile 27, 28 kann mittels Rolläden 35 im Bereich der einander gegenüberliegenden Seitenwände 38 und 39 verschlossen werden.

Die hinter der Fahrerkabine 9 angeordnete Mannschaftskabine 29 ist über ein Übergangs- und Dichtelement 41 mit der Fahrerkabine 9 zu einer einheitlichen Mannschaftskabine 29 verbunden. Die Mannschaftskabine 29 ist neben den Türen 42 in der Fahrerkabine 9 auch über zusätzliche Türen 43 in den beiden Seitenwänden 38, 39 zugänglich. Die Ausrüstungskästen bzw. - abteile 27, 28 und die Mannschaftskabine 29 sind durch die Quertragelemente 16,17 und 18 voneinander getrennt.

Die beiden im Bereich der hinteren Fahrachse 7 befindlichen Quertragelemente 17 weisen in Längsrichtung des Fahrzeugrahmens 4 einen Abstand 44 voneinander auf, der bevorzugt um ein zum Auflegen von Schneeketten benötigtes Ausmaß größer ist als ein Durchmesser 45 des Rades 8. Damit wird ermöglicht, daß die beidseits des Ausrüstungskastens bzw. - abteiles 28 oberhalb der hinteren Fahrachse 7 angeordneten, diesem benachbarten Ausrüstungskästen bzw. -abteile 27 und 28 sich von einer Oberkante 46 des Fahrzeugrahmens 4 um die Länge 20 des Schenkels 21 nach unten in den sogenannten Tiefraum 47 erstrecken können, wodurch eine Durchlademöglichkeit von einer Bodenfläche 48 des Ausrüstungskasten bzw. -abteils 28 durchgehend bis zur Dachtragplatte 22 erzielt werden kann.

So kann beispielsweise ein Stromaggregat 49 oder ein hydraulisches Rettungsgerät oder eine Löschmittelpumpe oder sonstige Ausrüstungsgegenstände bzw. Löschmittelkanister für Zusatzmittel auf einem sogenannten Schwenkfach 50 angeordnet sein, welches um eine vertikale Schwenkachse 51 aus dem Inneren des Ausrüstungskasten bzw. -abteils 28 herausschwenkbar ist. Die Türanordnung 34 wird jeweils durch einen Rollladen 35 und im Bereich des Ausrüstungskastens bzw. -abteils 28, der der Mannschaftskabine 29 unmittelbar benachbart ist, sowie im Ausrüstungskasten bzw. -abteil 27 durch einen Rolladen 35 und eine Schwenkklappe 52 gebildet. Diese Schwenkklappe 52 ist aus ihrer in vertikaler Stellung befindlichen Ruhelage, in der der Rolladen 35 an der Schwenkklappe 52 zum dichten Abschluß des Ausrüstungskastens bzw. -abteils 27, 28 anliegt, nach außen in eine in dünnen, vollen Linien gezeichnete aufgeschwenkte Stellung verstellbar, in der sie eine Auftrittsplattform 53 für den Bediener bzw. Benutzer eines derartigen Einsatzfahrzeuges 1 bildet.

Während also vom Tiefraum 47 bis zur Dachtragplatte 22 seitlich des Fahrzeugrahmens 4 eine Durchladung möglich ist, ist oberhalb des Fahrzeugrahmens 4 eine Durchladung von einer Basis 54 des Horizontaltragelementes 12 bis zur Dachtragplatte 22 möglich.

Dadurch, daß die ganze Betätigungsmechanik der Lager- und Antriebsvorrichtung 36 für den Rolladen 35 in einem Montagegehäuse 55 untergebracht ist und der Rolladen 35 eine Baueinheit bildet, kann diese einfach in einer Ausnehmung 56 eines erhabenen Randbereiches 57 an den Längsseiten 58 der Dachtragplatte 22 montiert werden. Dadurch, daß der Rolladen 35 in einem Montagegehäuse 55 gelagert ist, bildet dieser einen in sich versteiften Bauteil, der eine größere Montagefläche aufweist, sodaß auch dann, wenn die Dachtragplatte 22 durch ein relativ dünnwandiges Blech oder Kunststoffelement gebildet wird, großflächig mit diesen verbunden werden kann und damit zusätzliche Verstärkungselemente zur Halterung des Rolladens 35 eingespart werden können.

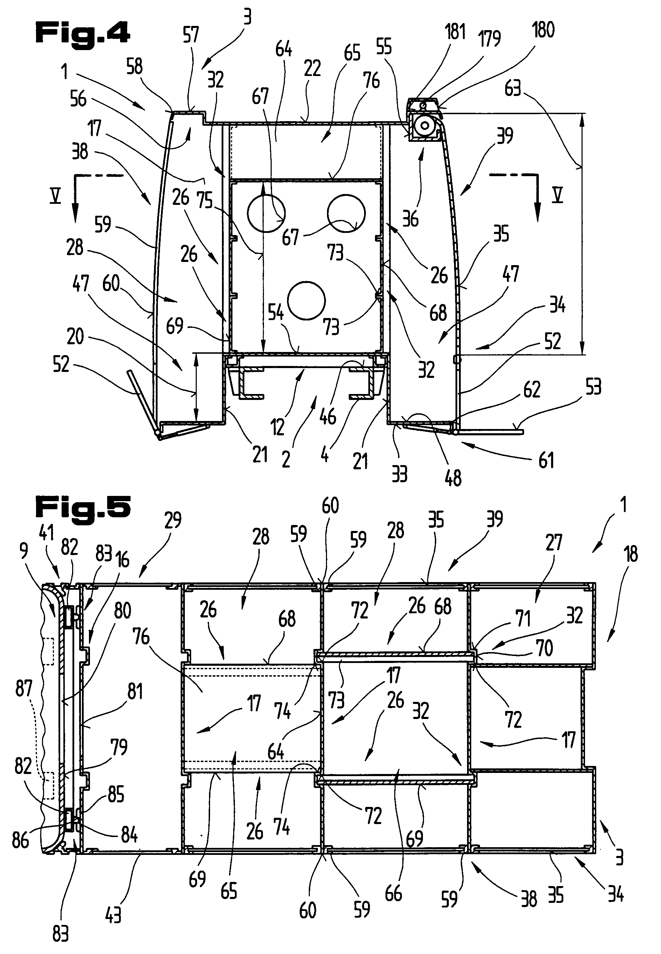

Wie besser aus der Zusammenschau der Fig. 4 und 5 zu ersehen ist, werden die Rollläden 35 in Führungsleisten 59 geführt, die im Bereich von Stirnseitenkanten 60 der Quertragelemente 16 bis 18 befestigt sind und gleichzeitig eine Versteifung der Endbereiche dieser meist ebenfalls durch gekantete Blechtafelzuschnitte aus Aluminium oder Stahlblech gebildet sind.

Dadurch, daß die Tiefräume 47 mit Schwenkklappen 52 verschließbar sind, die um eine Lageranordnung 61, welche parallel zu unteren Längsseitenkanten 62 der Blechprofile 33 verlaufen, verschwenkbar sind, werden auch diese Längsseitenkanten 62 versteift. Die nähere Anlenkung der Schwenkklappen 52 und deren Befestigung und Halterung im Bereich der Blechprofile 33 des Horizontaltragelementes 12 wird nachstehend noch näher erläutert. Wesentlich ist jedoch, daß dadurch Rolläden 35 mit gleicher Bauhöhe 63 eingesetzt werden können, unabhängig davon, ob Tiefräume 47 vorgesehen sind oder nicht, sodaß im Sinne eines einfachen Baukastensystems mit einer hohen Anzahl von Gleichteilen auch in diesem Bereich das Auslangen gefunden werden kann.

Wie weiters aus der Darstellung in den Fig. 4 und 5 am besten zu entnehmen ist, ist ein Freiraum zwischen der Basis 54 und der Dachtragplatte 22 zwischen den drei in Längsrichtung des Kastenaufbaues 3 hintereinander angeordneten Quertragelementen 17 als Tank 64 ausgebildet, wobei die beiden Tankkammern 65, 66 wie in Fig. 4 schematisch angedeutet über Durchgangsöffnungen 67 zu einem gemeinsamen Tank 64 verbunden sein können oder zum Aufbewahren von getrennten Löschmitteln, wie beispielsweise Wasser und Schaummittel verwendet werden können.

Seitenwände 68, 69 der Tankkammern 65, 66 werden durch in die Führungs- bzw. Verstärkungsbereiche 32, die als durchgesetzte, nutförmige Vertiefungen mit einer Basisfläche 70 und Seitenflächen 71, 72 ausgebildet sind, eingesetzte Vertikaltrennelemente 26 gebildet. Diese Vertikaltrennelemente 26 bestehen beispielsweise aus U-förmig gekanteten Blechplatten, die mit ihren hochgekanteten Stegen 73 aufeinanderliegen und beispielsweise über eine Zwischenschichte oder eine Kleberschichte dichtend miteinander verbunden sind. Die die Tankkammer 66 bildenden Vertikaltrennelemente 26 sind in den aufeinander zugewendeten Führungs- bzw. Verstärkungsbereichen 32 bzw. in den durch die Basisfläche 70 und die Seitenfläche begrenzten Schlitzen bzw. nutförmigen Aufnahmebereichen der Seite und der Länge nach geführt. Während die die Tankkammer 65 bildenden Vertikaltrennelemente 26 auf den einander zugewandten Außenseiten 74 der Seitenflächen 72 der Führungs- bzw. Verstärkungsbereiche 32 anliegen und mit diesen verbunden sind.

Die stirnseitige Abschottung der Tankkammern 65, 66 erfolgt durch die Quertragelemente 17.

Selbstverständlich ist es auch möglich, daß die Tankkammern 65, 66 eine unterschiedliche Höhe 75 aufweisen können. Dazu können eine oder mehrere der Vertikaltrennelemente 26 in Richtung der Dachtragplatte 22 weggelassen werden und der Tankraum, beispielsweise wie die Tankkammer 65 gezeigt, nach oben hin mit einem Horizontaltrennelement 76 abgeschlossen werden. Dieses Horizontaltrennelement 76 kann gleichzeitig als Fachboden dienen, sodaß beispielsweise wie in Fig. 2 schematisch angedeutet, ein von einer Seitenwand zur anderen Seitenwand durchgehender Ladeboden geschaffen wird, auf welchem Ausrüstungsgegenstände 77, beispielsweise ein Verteiler 78, aufbewahrt werden können.

Dadurch ist es möglich, durch Festlegung der Anordnung des Horizontaltrennelementes 76 Tankkammern 65, 66 mit unterschiedlichem Fassungsvermögen zu schaffen, sodaß deren Volumen beispielsweise an die Aufbewahrung unterschiedlicher Löschmittel, wie beispielsweise Wasser oder Schaummittel, einfach angepaßt werden kann. Während sich also beispielsweise die Tankkammer 66, wie aus Fig. 2 schematisch ersichtlich, bis in den Bereich der Dachtragplatte 22 erstrecken kann, erstreckt sich dann die Tankkammer 65 nur über einen Teil dieser Höhe, also bis zur Höhe 75.

Entsprechend den jeweiligen Aufbaubestimmungen und -normen in den unterschiedlichen Ländern ist es aber beispielsweise auch möglich, die Tankkammer 66 nicht nur zwischen den Vertikaltrennelementen 26 anzuordnen, sondern so auszubilden, daß sie sich über die gesamte Breite des Kastenaufbaues 3 erstreckt, wobei dann die Führungsleisten 59 in den Stirnseitenkanten 60 wegfallen können und die Vertikaltrennelemente 26 im Bereich der Stirnseitenkanten 60 angeordnet sind. Die Vertikaltrennelement 26 können zur höheren Steifigkeit und Stabilität des Kastenaufbaues 3 sicherlich beibehalten werden, nur wären sie dann ebenso wie beispielsweise das Quertragelement 17 in Fig. 4 mit entsprechenden Durchgangsöffnungen 67 für die Flüssigkeit zu versehen.

In Fig. 5 ist weiters gezeigt, daß auf einer Rückwand 79 der Fahrerkabine 9 eine Durchgangsöffnung 80 vorgesehen ist, die sich zumindest Bereichsweise mit einer Öffnung 81 im Quertragelement 16, welches der Fahrerkabine 9 unmittelbar benachbart zugeordnet ist, überdeckt. Die Durchgangsöffnung 80 wird auf der dem Quertragelement 16 zugewandten Außenfläche mit einem Verstärkungsrahmen 82 umgeben, der üblicherweise durch Formrohre oder entsprechend gestaltete Profile gebildet ist. Durch diesen Verstärkungsrahmen 82 wird die Rückwand 79 nach Herstellung der Durchgangsöffnung 80 soweit verstärkt, sodaß eine ausreichende Steifigkeit eine Anordnung von Verbindungselementen zwischen dieser und dem der Fahrerkabine 9 zugewendeten Quertragelement 16 ermöglicht.

Zur Ausrichtung der Relativlage zwischen der Fahrerkabine 9 und dem Kastenaufbau 3 ist eine Führungs- und Dämpfungsvorrichtung 83 angeordnet, die aus einem auf der Rückwand 79 der Fahrerkabine 9 angeordneten Führungs- bzw. Dämpfungselement 84, beispielsweise einen kegelstumpfförmigen Bauteil aus elastomerem Kunststoff oder einem Gummiverbundteil, gebildet ist, dem ein auf dem Quertragelement angeordnetes Führungs- bzw. Dämpfungselement 85 mit einer zum Führungs- bzw. Dämpfungselement 84 gegengleicher Querschnittsausbildung bildenden versehenen Aufnahmeöffnung 86 vorgesehen ist. Bei Relativverlagerungen zwischen der Fahrerkabine 9 und dem Kastenaufbau 3 kann durch entsprechende Verformung und elastische Verdichtung der Führungs- bzw. Dämpfungselemente 84 und 85 eine Zentrierung und Ausrichtung der beiden Teile, sowie eine Dämpfung der Auslenkbewegungen der unabhängig vom Kastenaufbau 3 über eigene Dämpfungselemente 87 auf dem Fahrgestellrahmen schwingungsgedämpft gelagerten Fahrerkabine 9 ausgeglichen und gedämpft werden.

Durch die gegengleiche konische bzw. kegelstumpfförmige Ausbildung der Führungs- bzw. Dämpfungselemente 84 bzw. der Aufnahmeöffnung 86 des Führungs- bzw. Dämpfungselementes 85 kann eine räumliche Ausrichtung und eine Dämpfung der räumlichen Relativbewegungen der Fahrerkabine 9 gegenüber dem Kastenaufbau 3 erzielt werden, wobei aufgrund der aufgebauten Rückstellkraft bei einer gegengleichen Verformung derselben, die beiden Teile in Ruhelage zumindest beim Stillstand des Fahrzeuges möglichst wieder in die gewollte Neutrallage zurückbewegt werden, sodaß ein den Bewegungsraum zwischen der Fahrerkabine 9 und dem Kastenaufbau 3 abdeckendes Übergangs- und Dichtelement 41 eine ständige dichtende Anlage an der Fahrerkabine 9 bzw. dem Kastenaufbau 3 einnehmen kann.

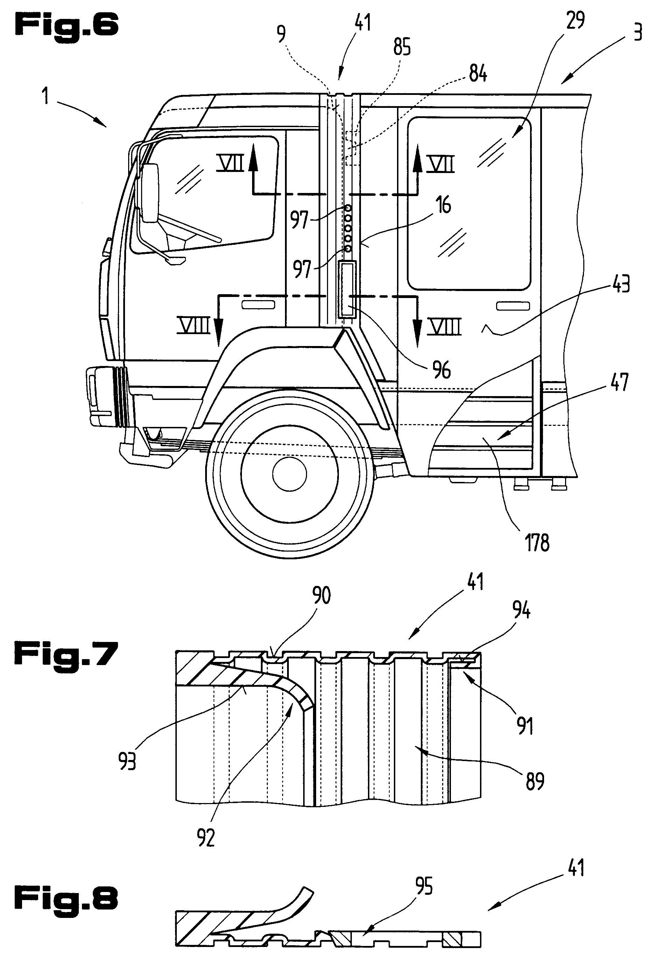

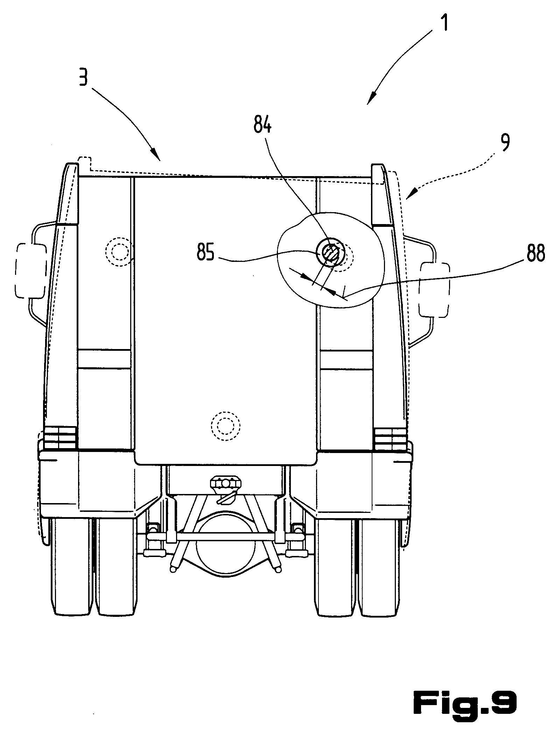

Wie aus den Fig. 6 bis 9 zu ersehen ist, kommt es nun bei einer räumlichen Verlagerung der Fahrerkabine 9 gegenüber dem Kastenaufbau 3, beispielsweise aus der in vollen Linien gezeigten Deckungslage in die in strichlierten Linien gezeichnete Relativlage, so bewirkt diese Relativverlagerung zu einer Verformung der Führungs- bzw. Dämpfungselemente 84 und 85 beispielsweise um eine Wegstrecke 88. Durch die Verformung der Führungs- bzw. Dämpfungselemente 84, 85 zueinander wird in diesen vor allem aufgrund der durch die Verdrängung des elastischen Materials aufgebauten Rückstellkraft die Rückstellkraft bei zunehmender Wegstrecke 88 größer und somit die Auslenkungsbewegung gedämpft. Unmittelbar nach Nachlassen der von außen einwirkenden Kräfte, führt diese elastische Verformung zu einer Rückstellbewegung in die in vollen Linien gezeichnete Neutrallage. Zum vereinfachten Verständnis der Wirkungsweise wurde die Verlagerung nur in seitlicher Richtung und damit auch die Wegstrecke 88 nur in der seitlichen Richtung eingezeichnet. Selbstverständlich handelt es sich bei einer Relativverdrehung der Fahrerkabine 9 gegenüber dem Kastenaufbau 3 meist um eine räumliche Bewegung und aufgrund der allseitigen Elastizität der Führungs- bzw. Dämpfungselemente 84 und 85 wirkt dann auch die Dämpfung und natürlich auch die Rückstellbewegung wieder in die neutrale, in vollen Linien gezeichnete Nullage.

Wie aus diesen Figuren weiters zu ersehen ist, besteht das Übergangs- und Dichtelement 41 aus einem aus elastischem Material bestehenden Längsprofil 89, welches im Querschnitt gewellt bzw. mit mehreren parallel zueinander, nutenförmigen Durchsetzungen 90 versehen ist. Damit ergibt sich ein in Art einer Ziehharmonika verstellbarer Balg, der im Bereich der beiden Längsseitenkanten mit Befestigungslaschen 91, 92 bevorzugt einstückig verbunden ist, von welchen die Befestigungslasche 92 mit einer Auflagefläche 93 zur Auflage an der Fahrerkabine 9 versehen ist. Die Querschnittsform dieser Befestigungslasche 92 ist in etwa an den Verlauf der Fahrerkabine 9 im Auflagebereich des Übergangs- und Dichtelementes 41 angepaßt. Die Befestigungslasche 91 schließt dagegen zwischen dem Längsprofil 89 und der Befestigungslasche 91 einen Aufnahmeschlitz 94 ein, der auf einem Halterungsteil des Kastenaufbaues 3, beispielsweise einer umlaufenden Blechleiste aufgeschoben werden kann. Selbstverständlich ist es aber gleichermaßen möglich, das Längsprofil 89 mit einer entlang der Längsseitenkante umlaufenden Kederschnur oder einem entsprechend ausgebildeten Gummiansatzteil zu versehen, der in eine am Quertragelement 16 angeordnete Kederleiste zum Eingriff gebracht werden kann.

In Fig. 6 und 8 ist weiters gezeigt, daß in dem Übergangs- und Dichtelement 41 eine Ausnehmung 95 angeordnet ist, durch die der Zugang zu darunterliegenden Kontroll- und Überwachungselementen, wie beispielsweise eine Wasserstandsanzeigevorrichtung für das Kühlwasser oder einen Ölmeßstab, sowie gegebenenfalls weitere Energieanschlüsse wie Steckdosen oder dgl. möglich ist. Diese Ausnehmung 95 kann durch eine wie aus Fig. 6 ersichtliche Klappe 96 verschlossen sein.

Des weiteren kann das Übergangs- und Dichtelement 41 oberhalb der Klappe 96 mit Durchbrechungen versehen sein, in welchen eine oder mehrere Kontrollampen 97 angeordnet sind. So ist es beispielsweise aufgrund der Anzahl der eingeschalteten Kontrolllampen 97 möglich, einen Füllstand eines Tanks für die Bedienungspersonen außerhalb des Einsatzfahrzeuges 1 leicht optisch sichtbar zu signalisieren. Es können aber natürlich auch andere Betriebszustände des Einsatzfahrzeuges oder der in diesen eingebauten Aggregaten, beispielsweise Notaus-Melder und dgl., eingebaut sein.

Durch eine derartige Ausgestaltung kann dieses Übergangs- und Dichtelement 41 zugleich technische Funktionen übernehmen.

Durch die längsprofilartige Ausbildung des Übergangs- und Dichtelementes 41 in Art eines gewellten Bandes wird eine hohe Flexibilität des Verbindungsbereiches zwischen der Fahrerkabine 9 und dem Kastenaufbau 3 ermöglicht, da sich dieses Band durch unterschiedliche räumliche Dehnungen und Verformungen jederzeit an unterschiedliche räumliche Relativlagen anpassen kann. Durch die Ausbildung mit einer dünnen Wandstärke wird auch bei extremen Relativverlagerungen zwischen der Fahrerkabine 9 und dem Kastenaufbau 3 das Entstehen von hohen Zugkräften im Bereich der Befestigungslaschen 91 und 92 zuverlässig verhindert, wodurch auch bei langer Betriebsdauer ein dichter Abschluß zwischen diesen beiden Teilen des Einsatzfahrzeuges erzielt werden kann.

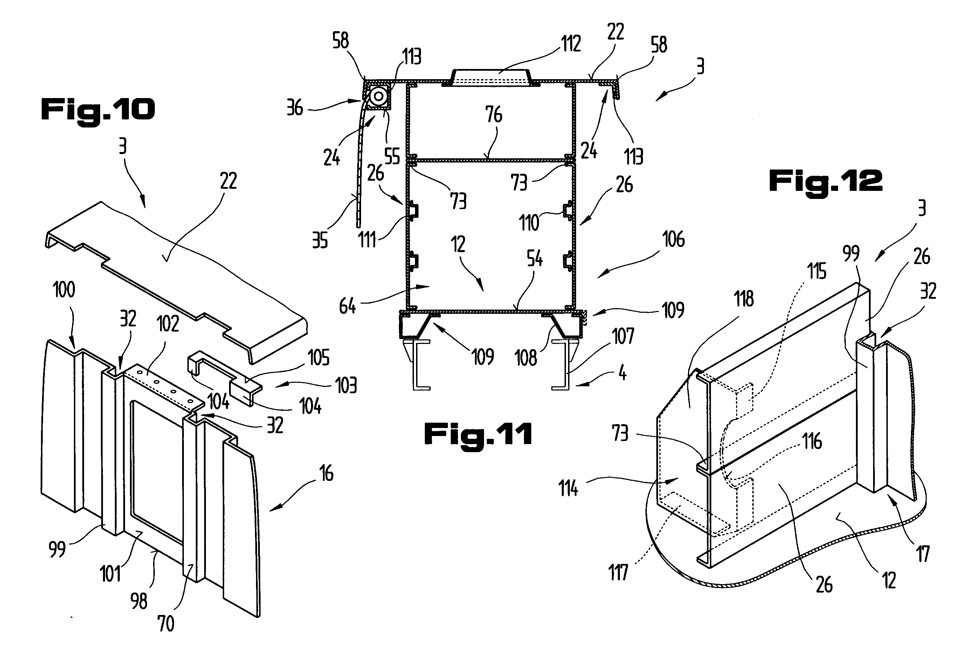

In Fig. 10 ist eine mögliche Ausgestaltung eines Quertragelementes 16 oder 17 bzw. 18 gezeigt, welches zur Versteifung in Richtung senkrecht zur Dachtragplatte 22 bzw. zu einer dieser abgewandten Stirnkante 98 mit längsverlaufenden, durch nutenförmigen Durchsetzungen 99 bzw. Abkantungen 100 versehen ist.

Um auch eine einer Torsion bzw. Diagonalverlagerung der einzelnen Teile des Kastenaufbaues 3 entgegenwirkende Befestigung zwischen dem Quertragelement 16 und der Dachtragplatte 22 zu erzielen, kann beispielsweise im Bereich eines Mittelsteges 101 dieser mit einer abgekanteten Stützfläche 102 verbunden sein.

Bevorzugt ragt diese Stützfläche 102 in die von der Basisfläche 70 der nutförmigen Durchsetzungen 99, die die Führungs- bzw. Verstärkungsbereiche 32 bilden, entgegengesetzte Richtung. Um eine größere Verbindungsfläche zwischen dem Quertragelement 16 und der Dachtragplatte 22 zu ermöglichen, ist es weiters auch vorteilhaft, beispielsweise ein zusätzliches Stützelement 103 anzuordnen, welches zur verbesserten seitlichen Führung mit Fortsätzen 104 versehen sein kann, die in die nutförmigen Durchsetzungen 99 bzw. in die Abkantung 100 eingesetzt werden können und eine Stützfläche 105 aufweisen, auf welcher dann die Dachtragplatte 22 aufliegt und beispielsweise über eine große Fläche mittels Kleber mit dieser verbunden werden kann. Eine derartige Anordnung von Stützelementen 103 kann nun beispielsweise nur bei den beiden, die äußeren Stirnendwände des Kastenaufbaues 3 begrenzenden Quertragelemente 16 und 18 erfolgen. Es ist aber auch ebenso möglich, diese Stützelemente 103 bei jedem der Quertragelemente 16 bis 18 einzusetzen.

Durch die Anordnung der Fortsätze 104 wird auch bei einem zusätzlich auf dem Quertragelement 16 befestigten Stützelement 103 eine hohe Seitenstabilität geschaffen, da die Stützelemente 103 durch Formschluß über die Fortsätze 104 in den nutförmigen Durchsetzungen 99 geführt sind.

In Fig. 11 ist eine Ausführungsvariante für einen Zentralteil bzw. einen Kernteil 106 des Kastenaufbaues 3 gezeigt. Dieser Kernteil 106 erstreckt sich oberhalb des durch die Längsträger 107 des Fahrzeugrahmens 4 begrenzten Querschnittsbereiches.

Aus dieser Darstellung ist ersichtlich, daß das Horizontaltragelement 12 auch gleichzeitig die Funktion als Träger eines Hilfsrahmens 108, welcher aus Knotenversteifungselementen 109 besteht, übernimmt.

Auf diesen Knotenversteifungselementen 109 liegt die Basis 54 des Horizontaltragelementes 12 auf, die bei entsprechender Ausbildung gegebenenfalls als U-förmiger Querschnitt ausgebildet sein kann, wobei die Schenkel in Richtung des Fahrzeugrahmens 4 vorragen können, wie dies durch strichlierte Linien angedeutet ist.

Auf das Horizontaltragelement 12 sind in diesem Ausführungsbeispiel Vertikaltrennelemente 26 angeordnet, die aus einem einstückig gekanteten Blechzuschnitt gebildet sind. Um einen höheren Ausbeulwiderstand dieser Vertikaltrennelemente 26 zu erreichen, sind auf den einander zugewandten Oberflächen Versteifungselemente 110, beispielsweise Längsprofile aus Blech, Aluminium oder dgl. mit einem in etwa C- oder hutprofilförmigen Querschnitt, über eine Kleberschicht 111 oder durch ein Schweißverfahren, beispielsweise auch durch Punktschweißen, am Vertikaltrennelement 26 befestigt.

Auf nach innen gekanteten Stegen 73 der Vertikaltrennelemente 26 ist ein Horizontaltrennelement 76 angeordnet, mit welchem beispielsweise ein Tank 64 in Richtung der Dachtragplatte 22 abgeschottet bzw. unterteilt werden kann.

Ein Freiraum zwischen diesem Horizontaltrennelement 76 und der Dachtragplatte 22 kann beispielsweise als Überlaufkammer für den Tank 64 verwendet werden. In der Dachtragplatte 22 kann ein Mannloch 112 zum Einstieg in diesen Überlaufraum und von dort gegebenenfalls eine weitere Mannlochklappe in den Tank 64 angeordnet sein.

Zur weiteren Versteifung des Kastenaufbaues 3 ist es weiters möglich, die Längsseite 58 der Dachtragplatte 22 durch ein Längsstützelement 24, beispielsweise ein Blechprofilteil 113 mit einem C- oder L- oder U-förmigen Querschnitt oder ähnlichem, anzuordnen, wie dies in den gegenüberliegenden Längsseitenbereichen der Dachtragplatte 22 gezeigt ist.

Wird beispielsweise ein Blechprofilteil 113 mit einem L-förmigen Querschnitt ausgebildet, so sind die beiden Schenkel dieses Blechprofilteils 113 flächig mit der Dachtragplatte 22 bzw. einem von dieser in Richtung des Horizontaltragelementes 12 vorragenden Schenkel flächig verbunden. Bei einer Ausbildung des Blechprofilteils 113 mit U- bzw. C-förmigem Querschnitt ist es auch möglich, diese Längsstützelemente 24 als Montagegehäuse 55 für die Lager- und Antriebsvorrichtung 36 der Rolläden 35, mit welchen die Seitenwände 38, 39 des Kastenaufbaues 3 verschlossen werden, zu verwenden.

Eine weitere vorteilhafte Ausgestaltung und Anordnung von Vertikaltrennelementen 26 ist in Fig. 12 gezeigt. Vor allem dann, wenn eine vertikale Abschottung oder Trennung des Kastenaufbaues 3 durch kleinflächige Vertikaltrennelemente 26 erzielt wird, ist es von Vorteil, wenn die Positionierung und Aussteifung derselben durch Versteifungselemente 114 erfolgt, die beispielsweise durch ein L-förmiges Profil gebildet sind.

Bei diesem L-förmigen Profil sind die einen Schenkel bildenden Stützplatten 115 flächig auf den Vertikaltrennelementen 26 abgestützt und beispielsweise über eine nicht dargestellte Kleberschicht mit dieser verbunden und weisen eine Ausnehmung 116 bzw. Ausklinkung auf, welche die in Richtung des Versteifungselementes 114 vorragenden Stege 73 der Vertikaltrennelemente 26 übergreift und aufnimmt.

Zur noch stärkeren Versteifung ist es auch möglich, auf einer der Stirnseiten des Versteifungselementes 114 einen weiteren abgekanteten Blechteil 117 anzuordnen.

Durch dieses Versteifungselement 114 werden nunmehr die beiden Vertikaltrennelemente 26 in ihrer fluchtenden Lage übereinander gehalten und gleichzeitig die Ausbeulsicherheit dieser kleinflächigen Vertikaltrennelemente 26 unterstützt.

Ein nach innen vorragender Schenkel 118 des Versteifungselementes 114, der beispielsweise in etwa 90° zu den Stützplatten 115 angeordnet ist, kann, falls der von dem Vertikaltrennelement 26 umgrenzte Innenraum einen Tank bildet, gleichzeitig als sogenanntes Schwallblech verwendet werden.

Bei dem dargestellten Ausführungsbeispiel liegen die Vertikaltrennelemente 26 auf dem Horizontaltragelement 12 auf und sind seitlich sowie in Längsrichtung durch die Führungs- bzw. Verstärkungsbereiche 32, beispielsweise die Durchsetzung 99 bzw. das Quertragelement 17, geführt.

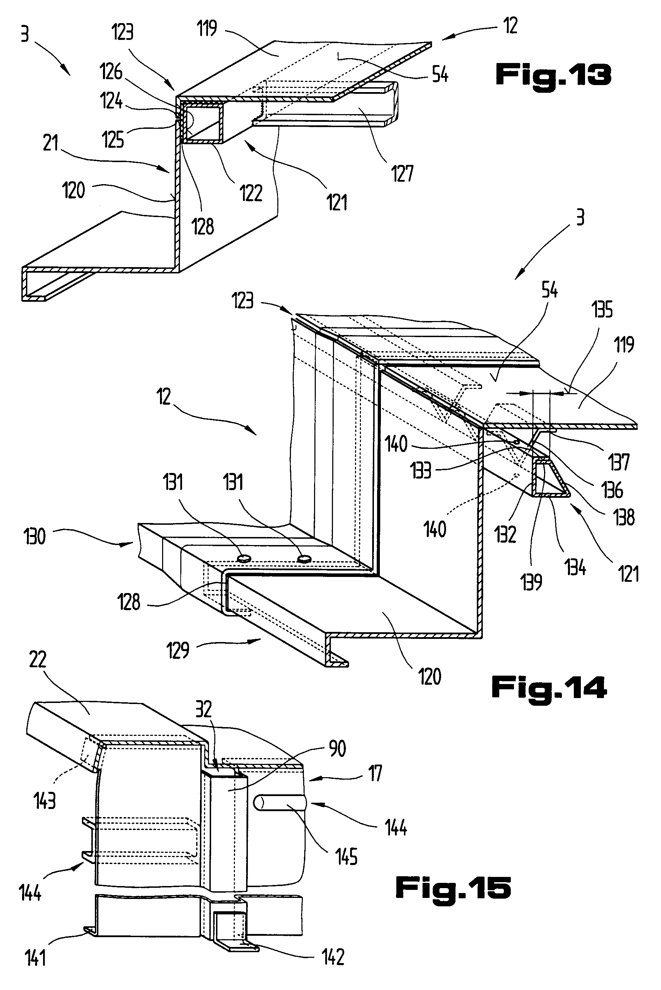

In Fig. 13 ist eine mögliche Ausführungsvariante des Horizontaltragelementes 12 im Detail dargestellt. In diesem Fall besteht das Horizontaltragelement 12 im Querschnitt aus mehreren parallel zueinander verlaufenden, miteinander verbundenen Einzelteilen 119,120. Wie aus dieser Darstellung weiters ersichtlich ist, ist zwischen den zueinander in Längsrichtung des Kastenaufbaues 3 parallel verlaufenden Einzelteilen 119, 120 ein Knotenversteifungselement 121 angeordnet, welches im vorliegenden Fall durch ein Längsprofil 122 mit hohlprofilförmigem Querschnitt gebildet ist. Dieses Profil ist im Bereich einer Stirnkante 123 zwischen dem die Basis 54 des Horizontaltragelementes 12 bildenden Einzelteil 119 und dem einen Schenkel 21 bildenden Einzelteil 120 des Horizontaltragelementes 12 angeordnet. Wie weiters zu ersehen ist, sind die einander unmittelbar benachbarten Stirnkanten 124, 125 des Horizontaltragelementes 12 im Bereich einer Seitenwand 126 angeordnet, sodaß der Stoßbereich zwischen den beiden Einzelteilen 119, 120 durch das Längsprofil 122 überdeckt ist. Zur Versteifung der Gesamtkonstruktion ist es dann auch vorteilhaft, wenn die Knotenversteifungselemente 121 über quer zu deren Längsrichtung verlaufende Querträger 127 verbunden sind, da im Bereich jeder der beiden Stirnkanten 123 des Horizontaltragelementes 12 jeweils ein Knotenversteifungselement 121 angeordnet ist. Eine hohe Festigkeit des Horizontaltragelementes 12 wird dann erreicht, wenn die Knotenversteifungselemente aus Stahl bestehen und ebenso die Querträger 127 aus Stahl hergestellt sind.

Die Verbindung zwischen den einzelnen Einzelteilen 119, 120 und dem Knotenversteifungselement 121 kann durch eine Kleberschicht 128 erfolgen. Es ist aber selbstverständlich auch möglich, diese Teile miteinander und mit dem Knotenversteifungselement 121 zu verschweißen oder zwischen diesen Elementen mechanische Verbindungselemente wie Nieten, Schrauben oder dgl. anzuordnen.

In Fig. 14 ist eine weitere Ausführungsvariante des Horizontaltragelementes 12 gezeigt.

Das Horizontaltragelement 12 besteht in diesem Fall aus mehreren in Längsrichtung der Stirnkante 123 hintereinander angeordneten Bauteilen 129, 130. Diese sind in ihren Endbereichen einander überlappend ausgebildet und entweder über eine Kleberschicht 128 oder über Befestigungsmittel 131 miteinander verbunden. Dadurch ist es auch bei langen Kastenaufbauten 3 ohne weiteres möglich, mit gleichartig geformten Bauteilen 129, 130 das Auslangen zu finden, indem bei längeren Kastenaufbauten 3 mehrere solcher Bauteile 129, 130 in Längsrichtung hintereinander angeordnet werden und bei kürzeren Kastenaufbauten 3 weniger.

Grundsätzlich kann dann mit zwei Bauteilen 129, 130 das Auslangen gefunden werden, da zwischen zwei in Längsrichtung hintereinander, distanziert voneinander angeordneten Bauteilen 129 ein Bauteil 130 angeordnet ist, der von seinen Abmessungen um die Blechstärke gegenüber den Bauteilen 129 größer ausgebildet ist und somit die Bauteile 129 im Überdeckungsbereich übergreift. Selbstverständlich wäre es aber auch möglich, durch entsprechende Versetzung der Endbereiche eines der beiden Bauteile 129, 130 nur im Überdeckungsbereich die doppelte Blechstärke vorziehen zu müssen, also die Enden etwa muffenartig auszubilden.

Während bei der zuvor beschriebenen Ausführungsvariante nach Fig. 13 die Stirnkanten 124, 125 der beiden Einzelteile 119, 120 sich im Bereich der Seitenwand 126 des Knotenversteifungselementes 121 überlappen, ist es selbstverständlich auch möglich, daß die Basis 54 durch eine ebenflächige Blechplatte gebildet ist, die den Einzelteil 119 darstellt. Im Bereich der Stirnkante 123 schließt dann der Einzelteil 120 an.

Des weiteren ist in Fig. 14 eine spezielle Art eines Knotenversteifungselementes 121 gezeigt. Dieses umfaßt zwei parallel zueinander über einen Quersteg 132 verbundene und der Höhe nach voneinander distanzierte Längsstege 133, 134. Einer der Längsstege, nämlich der Längssteg 133, weist eine geringer Breite 135 auf als der Längssteg 134. An jenem Längssteg 134, der eine größere Breite aufweist, schließt an der vom Quersteg 132 abgewendeten Seite ein Seitensteg 136 an, der mit einer zu diesem winkelig, jedoch parallel zu dem eine geringere Breite 135 aufweisenden Längssteg 133 vorspringenden Randleiste 137 versehen ist.

Aus dem Seitensteg 136 und der Randleiste 137 sind über einen Teil der Länge des Knotenversteifungselementes 121 Stützteile 138 ausgeklinkt und in Richtung des Quersteges 132 unter einem Winkel nach innen geneigt, sodaß ein ursprünglich die Randleiste 137 bildende Randleistenteil 139 über dessen Breite an einer dem Längssteg 134 zugewandten Unterseite des kürzeren Längssteges 133 anliegt. Sowohl der Längssteg 133 als auch der Längssteg 134 können mit senkrecht zu ihrer Oberfläche ausgerichteten Bohrungen 140 durchsetzt sein, sodaß durch diese Bohrungen 140 die Befestigungsmittel für die Befestigung des Horizontaltragelementes 12 auf dem Fahrzeugrahmen 4 erfolgen kann.

In Fig. 15 ist eine Ausführungsform des Quertragelementes 17 gezeigt. Dieses Quertragelement 17 ist ebenfalls mit Führungs- bzw. Verstärkungsbereichen 32 in Form von Durchsetzungen 90 gebildet. Zur Verbindung des Quertragelementes 17 mit einem nicht dargestellten Horizontaltragelement 12 bzw. der Dachtragplatte 22 können einzelne Bereiche bzw. über die gesamte sich quer zur Fahrzeuglängsrichtung erstreckenden Breite mit Stützelementen 141 bzw. Stützprofilen 142 oder Fortsätzen 143 versehen sein.

Diese Stützelemente 141 sind beispielsweise durch winkelige abgekantete Bereiche in den Stirnendbereichen des Quertragelementes 17 gebildet bzw. durch Stützprofile 142, beispielsweise L-Profile, die im Stirnendbereich des Quertragelementes 17, beispielsweise im Bereich der Führungs- bzw. Verstärkungsbereiche 32 befestigt sein. Auch die Fortsätze 143, die beispielsweise der Dachtragplatte 22 zugewendet sein können, können durch abgekantete Bereiche des Quertragelementes 17 gebildet sein. Vorteilhaft wird durch diese Stützelemente 141 bzw. Stützprofile 142 erreicht, daß die Quertragelemente 17 eine Eigenstandfestigkeit aufweisen, wodurch die Befestigungsarbeit und auch die Einleitung der Schub-, Zug- und Biegekräfte verbessert wird. Gleiches gilt für die Befestigung der Dachtragplatte 22 über die Fortsätze 143. Dadurch ist es auch nicht erforderlich, daß die Stützelemente 141 und die Stützprofile 142 bzw. Fortsätze 143 sich durchgehend über die gesamte Breite des Quertragelementes 16 bis 18 erstrecken, sondern es reicht, wenn diese in einzelnen Bereichen vorgesehen sind, um die Krafteinleitung und Befestigung zu ermöglichen. Zur zusätzlichen Versteifung der Quertragelemente 17 ist es weiters aber auch möglich, parallel zu dem Horizontaltragelement 12 bzw. einer dieser zugewandten Aufstandsfläche, Versteifungselemente 144 vorzusehen. Diese können beispielsweise ebenso wie die Versteifungselemente 110 der Vertikaltrennelemente 26 durch verschieden geformte Profile, Blechteile oder sonstige Bauelemente gebildet sein. In den gezeigten Ausführungsbeispielen wird das Versteifungselement 144 durch ein U-Profil gebildet.

Es ist aber auch ebenso möglich, das Versteifungselement 144 durch Sicken 145 in den die Quertragelemente 16 bis 18 bildenden Blechteilen anzuordnen. Dadurch wird die Ausbeulsicherheit der flächigen Quertragelemente 16 bis 18 zusätzlich erhöht.

Vor allem die Versteifungselemente 144, die U-Profile oder sonstige Aluminiumprofile können gleichzeitig auch die Aufnahmen für Ausrüstungsgegenstände bzw. Fachböden oder dgl. bilden.

Im übrigen können die Quertragelemente 16 bis 18 durch einen ebenflächigen, mehrfach gekanteten Blechzuschnitt gebildet sein, an dem auch die Fortsätze 143 bzw. die Stützelemente 141 einstückig angeformt sein können.

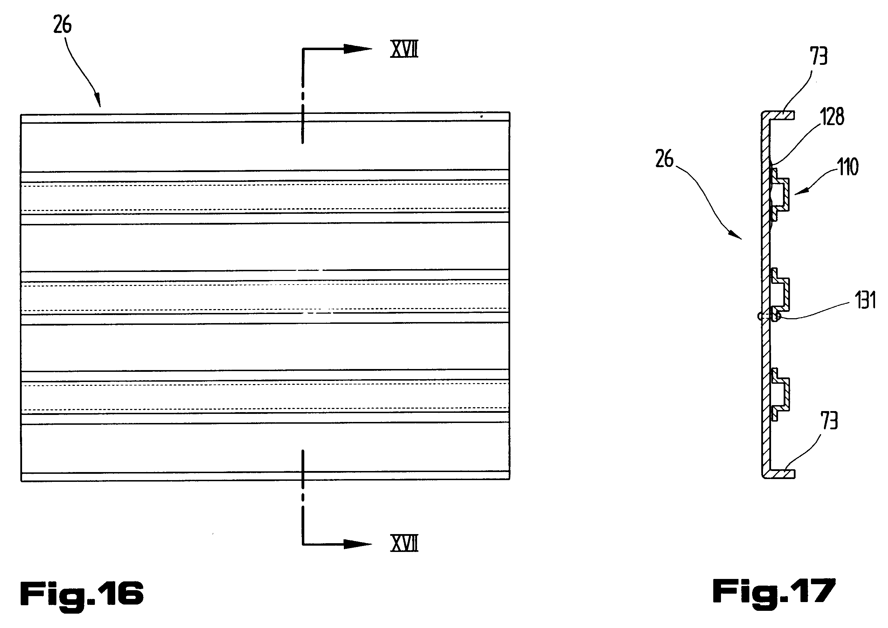

In den Fig. 16 und 17 ist ein Vertikaltrennelement 26 gezeigt, welches sich über eine größere Höhe erstreckt.
Um eine ausreichende Verbeulsicherheit dieses Vertikaltrennelementes 26 zu erzielen, welches im wesentlichen U-förmig ausgebildet ist und im Endbereich mit aufgekanteten Stegen 73 versehen ist, sind im Bereich zwischen den Stegen 73 Versteifungselemente 110 vorgesehen, die durch über eine Kleberschicht 128 oder Befestigungsmittel 131, z. B. Nieten, mit dem Vertikaltrennelement 26 verbunden sein können.

Selbstverständlich kann auch jede andere Art der Befestigung der Versteifungselemente 110 auf dem Vertikaltrennelement 26, beispielsweise Punktschweißen oder Heftschweißungen, erfolgen.

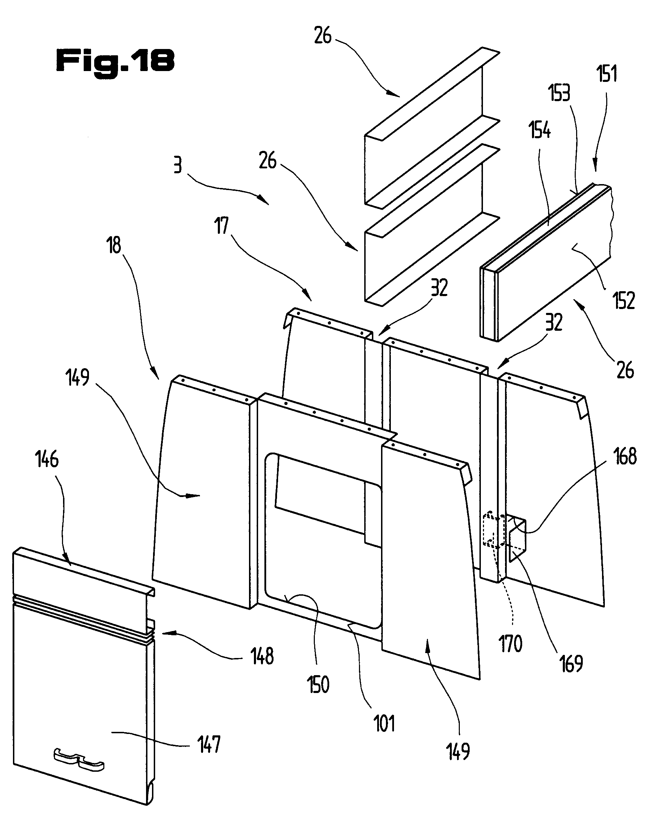

In Fig. 18 sind zwei Quertragelemente 17 und 18 gezeigt.

Das Quertragelement 18 bildet die Rückwand des Kastenaufbaues 3 und ist im Bereich eines Mittelsteges 101 mit einer Durchsetzung versehen.

Diese Durchsetzung ist derart gewählt, daß ein Verkleidungselement 146 und eine Heckklappe 147, die beispielsweise über eine horizontale Scharnieranordnung 148 am Verkleidungselement 146 befestigt sein kann, ebenflächig in Seitenteile 149 des Quertragelementes 18 integriert werden kann.

Um einen Durchgang durch das Quertragelement 18 im Bereich der Heckklappe 147 zu erzielen, ist diese im Bereich des Mittelsteges 101 mit einem Durchbruch 150 versehen.

Durch die unterschiedliche Ausgestaltung dieser Quertragelemente 18 ist es somit in einfacher Weise möglich, den Durchbruch 150 über eine Heckklappe 147 oder eine Schwenktüre, einen Rolladen oder dgl. zugänglich zu machen und trotzdem einen Klappenabschluß des Fahrzeugaufbaues zu erzielen. Ist eine Zugänglichkeit zum Kastenaufbau 3 von hinten her, also von Seiten der Rückwand her, nicht erforderlich, so kann dort auch ein vollflächiges Blechelement eingesetzt werden, sodaß eine ebenflächige Ausbildung der Rückwand bei unterschiedlich ausgebildeten Fahrzeugen erzielbar ist.

Des weiteren ist in der in Art einer Explosionszeichnung ausgeführten Darstellung ersichtlich, daß im Führungs- bzw. Verstärkungsbereich 32 entweder Vertikaltrennelemente 26 eingesetzt werden können, die durch abgekantete, ebenflächige Blechzuschnitte gebildet sind, die aus Stahlblech, Aluminium oder beispielsweise auch als GFK-Formteile ausgebildet sein können.

Ist dagegen das Vertikaltrennelement 26 zum Abtrennen einer Tankkammer 65 gegenüber den übrigen Bereichen eines Kastenaufbaues 3 erforderlich, so kann dafür beispielsweise auch ein Sandwichelement 151 eingesetzt werden, welches aus zwei Decklagen 152, 153 und einem Kern 154 zusammengesetzt ist. Während die Decklagen 152, 153 aus unterschiedlichsten Materialien, wie beispielsweise Metall oder Kunststoff, beispielsweise GFK oder Aluminium oder Stahlblech oder Nirostablech gebildet sein können, wird der Kern 154 üblicherweise durch einen Kunststoff bzw. Kunststoffschaum oder eine Wabe, insbesondere eine Aluminiumwabe, gebildet. Je nach verwendeten Materialien können dadurch unterschiedliche Ausbeulsicherheiten und Festigkeiten des Sandwichelementes 151 erzielt werden. Dazu haben diese Sandwichelemente 151 auch den weiteren Vorteil, daß beispielsweise bei der Abgrenzung des Tanks 64 gegenüber dem übrigen Aufbau auch eine Isolierung der Tankkammer 65 erreicht wird, wodurch bei Einsätzen bei niederen Temperaturen im Freien die Eisbildung in der Tankkammer 65 hinausgezögert werden kann und überdies kann dadurch die Schwitzwasserbildung an den Wänden der Tankkammer 65 in vorteilhafter Weise reduziert werden.

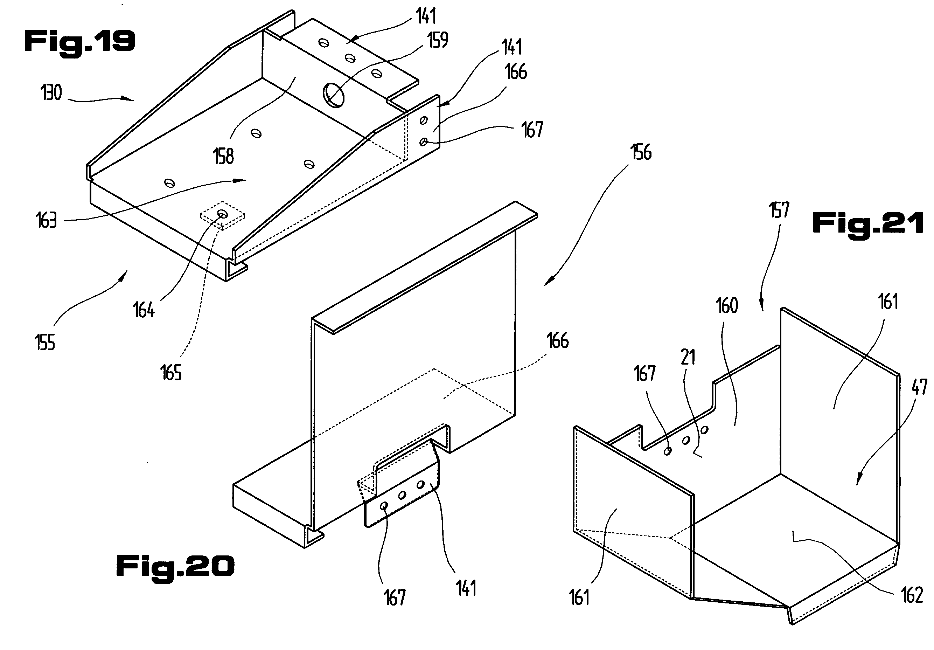

In den Fig. 19 bis 21 ist gezeigt, daß der Kastenaufbau 3 neben den aus dem Horizontaltragelement 12, dem Quertragelement 16 bis 18 sowie der Dachtragplatte 22 bestehenden Hauptelementen sowie gegebenenfalls den Vertikaltrennelementen 26 auch noch mit Formbauteilen 155, 156 und 157 versehen sein kann. Zusätzlich zu den nach einem einheitlichen Konstruktionsprinzip und in etwa gleichartig hergestellten Bauteilen, sind diese Formbauteile 155 bis 157 bereits so ausgebildet, daß sie jeweils einen bestimmten Einsatzzweck erfüllen bzw. zur Aufnahme vorbestimmter Einrichtungen ausgebildet sind.

So können beispielsweise die Formbauteile 155 bis 157 einen Bauteil 130 des Horizontaltragelementes 12 bilden. Dies hat beispielsweise den Vorteil, daß in einem Teil des Horizontaltragelementes 12 die Knotenversteifungselemente 121 wegfallen können und somit in diesem Bereich des Kastenaufbaues 3 eine größere Innenhöhe geschaffen wird. Dadurch kann eine bessere Bedienungshöhe und ein leichterer Einbau, beispielsweise eines Pumpenaggregates erreicht werden. Durch die Verwendung der weiteren Formbauteile 156 und 157 kann der Bauteil 130 in einer den Momentenverlauf des übrigen Horizontaltragelementes 12 entsprechenden Festigkeit erstellt werden. Dazu ist ein die Basis 54 des Horizontaltragelementes 12 verlängerter Formbauteil 155 vorgesehen, der mit einem Höhenversatz, welcher in etwa der Bauhöhe des Knotenversteifungselementes 121 entspricht, versehen sein kann. Dieser Formbauteil kann in einer Stirnwand 158 mit einer entsprechenden Ausnehmung 159 zum Durchgang einer Antriebswelle vom Nebenantrieb des Fahrzeuges zu einer Feuerlöschpumpe oder ein Stromaggregat oder dgl. versehen sein. Der Formbauteil 155 ist mit Stützelementen 141 in dem der Basis 54 bzw. den Schenkeln 21 zugewandten Bereich des Horizontaltragelementes 12 versehen, sodaß eine steife Verbindung mit den übrigen Bauteilen des Horizontaltragelementes 12 ermöglicht wird. Die Schenkel 21 des Horizontaltragelementes 12 werden in diesem Fall durch Seitenwände 160 des Formbauteils 157 gebildet, der einen Tiefraum 47 in dem entgegen der Fahrtrichtung an die hintere Fahrachse 7 anschließenden Bereich bildet. Dieser Formbauteil 157 kann zweckmäßig auch mit Stirnwänden 161 versehen sein, die die vertikalen Teile des Quertragelementes 18 zwischen dem Niveau der Basis 54 und einer Grundplatte 162 bilden, oder die als überlappendes Verbindungselement mit den Quertragelementen 17 und 18 ausgebildet sein können.

Als die Quertragelemente 17 und 18 versteifendes Zwischenelement kann dann der Formbauteil 156 dienen, der im wesentlichen L- bzw. Z-förmig ausgebildet ist und zwischen den beiden Formbauteilen 155 und 157 eingefügt sein kann, um die vertikale Versteifung der Quertragelemente 17 und 18 zu ermöglichen. Damit kann ein Aufnahmeraum 163 für die Feuerlöschpumpe auf die jeweiligen Abmessungen abgestimmt und gegebenenfalls mit entsprechenden Aufnahmebohrungen 164 zur Lagerung der Feuerlöschpumpe versehen sein und dazu beispielsweise in diesen Bereichen mit, wenn dieser Formbauteil 155 aus GFK besteht, in diesen eingearbeiteten oder sonst, wenn dieser aus einem ebenen Blechzuschnitt gebildet ist, auf diese aufgeschweißten oder aufgeklebten Verstärkungselementen 165 versehen sein, um eine ausreißfeste Lagerung der Feuerlöschpumpe oder sonstiger Aggregate oder schwerer Einrichtungsgegenstände zu ermöglichen.

Die Verwendung dieser in den Fig. 19 bis 21 dargestellten Formbauteile 155 bis 157 ermöglicht somit eine große Freizügigkeit bei der Herstellung von freitragenden Kastenaufbauten 3, und es ist selbstverständlich möglich, diese Formbauteile nicht nur zwischen den Quertragelementen 17 und 18 sondern auch zwischen jede beliebigen anderen Quertragelemente 16 bis 18 einzusetzen. Zur entsprechend torsionssteifen Verbindung, beispielsweise der Formbauteile 155 bis 157 untereinander, können diese mit entsprechend großflächigen Befestigungsflanschen 166 versehen sein, die mehrere Bohrungen 167 zur Aufnahme von Befestigungsmittel aufweisen. Gleichermaßen können auch die Formbauteile 156, 157 durch ausgeklinkte und mehrfach gekantete Stützelemente 141 gebildet sein - wie in Fig. 20 gezeigt -, deren Bohrungen 167 mit entsprechend gegengleichen und übereinstimmend angeordneten Bohrungen 167 in der Seitenwand 160 des Formbauteils 157 - wie in Fig. 21 gezeigt - angeordnet sind.

Abschließend sei noch darauf hingewiesen, daß selbstverständlich das Konzept eines derartigen freitragenden Kastenaufbaues 3 für Einsatzfahrzeuge 1 in vielfältiger Weise abwandelbar ist.

So ist es unter anderem möglich - wie in Fig. 18 gezeigt -, in einem Quertragelement 17 einen Durchbruch 168 vorzusehen. Dieser kann dadurch hergestellt werden, daß ein Wandteil 169 ausgeklinkt und beispielsweise unter 90° zum Quertragelement 17 abgekantet wird. Durch diesen Durchbruch 168 kann dann ein Knotenversteifungselement 121 hindurchragen und beispielsweise mit dem Wandteil 169 verbunden werden, wodurch eine exakte Positionierung und eine hohe Belastbarkeit des Quertragelementes sowie eine entsprechende Versteifung des Kastenaufbaues 3 erzielbar ist. Selbstverständlich kann dieser Durchbruch 168 auch von einem Versteifungselement 110 bzw. 144 durchragt sein. Vor allem dann, wenn die Versteifungselemente 110 und 144 das Quertragelement 16 bis 18 durchragen, ist eine unmittelbare kraftschlüssige Verbindung über diese Versteifungselemente 110 und 144 zwischen den beidseits eines Quertragelementes 17 angeordneten Vertikaltrennelementen 26 möglich. Dadurch wird die Winkelsteifigkeit und Torsionssteifigkeit des Kastenaufbaues 3 zusätzlich erhöht. Des weiteren ist es beispielsweise möglich, um die Ausreißfestigkeit von Befestigungsmitteln 131 beispielsweise im Bereich der Quertragelemente 16 bis 18 oder auch der Vertikaltrennelemente 26 zu erhöhen, in den Führungs- bzw. Verstärkungsbereichen 32 Verstärkungselemente 170 - wie in Fig. 18 durch strichlierte Linien angedeutet - einzulegen. Diese Verstärkungselemente 170 können durch entsprechende Profilteile oder abgekantete Blechteile gebildet sein, die über eine Kleberschicht oder über Schweißverbindungen oder Haftverbindungen an dem jeweiligen Bauelement, insbesondere im Quertragelement 16 bis 18 und den Vertikaltrennelementen 26, befestigt sein können.

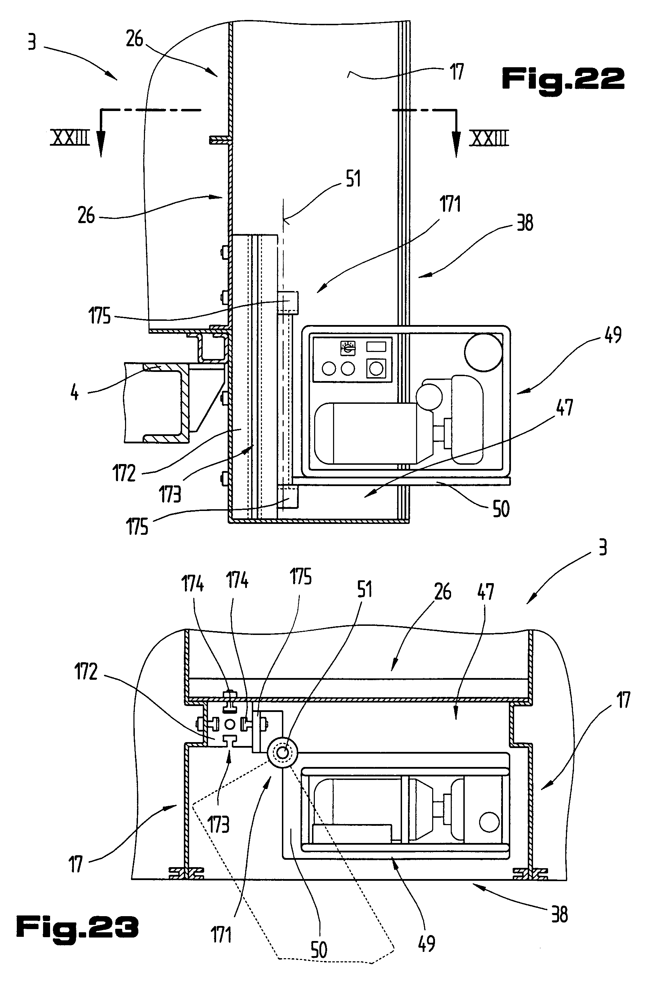

In den Fig. 22 und 23 ist ein Teil des Kastenaufbaues 3 im Bereich einer Seitenwand 38 gezeigt, bei dem sich das Quertragelement 17 soweit über den Fahrzeugrahmen 4 nach unten erstreckt, daß ein Tiefraum 47 gebildet ist.

Zum Befestigen von schweren Ausrüstungsgegenständen, vor allem aber auch zum Befestigen einer Schwenklagerung 171 mit einer Schwenkachse 51 für ein Schwenkfach 50, beispielsweise ein Stromaggregat 49, - in Fig. 22 in ausgeschwenkter Stellung gezeichnet - ist es auch möglich, am Quertragelement 17 und/oder im Eckbereich zwischen dem Quertragelement 17 und einem Vertikaltrennelement 26 ein Tragprofil 172 anzuordnen, welches wie beispielsweise besser aus Fig. 23 ersichtlich ist, als gezogenes Alumiuniumprofil mit hinterschnittenen Halterungsnuten 173 gebildet sein kann.

Über in diese hinterschnittenen Halterungsnuten 173 eingesetzte Nutensteine 174 kann das Tragprofil 172 sowohl am Quertragelement 17 als auch, falls erwünscht, am Vertikaltrennelement 26 befestigt sein. Diese Nutensteine 174 sind meist mit einem aus dem Tragprofil 172 hervorragenden Gewindeansatz versehen, sodaß sie über auf den Gewindeansatz aufgedrehte Muttern jederzeit im Inneren des Kastenaufbaues 3 befestigt werden können.

Über die Nutensteine 174 kann auch die Befestigung eines Traggestells 175 für die Schwenklagerung 171 mit der Schwenkachse 51 befestigt sein. Dadurch ist es möglich, das Stromaggregat 49 mittels Schwenkfach 50 in die in strichlierten Linien dargestellte Stellung zu verschwenken und dadurch einen besseren Zugriff zu ermöglichen.

Über derartige Tragprofile 172 ist es aber auch ebenso möglich, Fachböden oder sonstige Halterahmen für Ausrüstungsgegenstände und Aggregate im Kastenaufbau 3 zu lagern und zu haltern.

Durch die spezielle Ausbildung des zuvor beschriebenen Kastenaufbaues 3 ist es nunmehr aber auch möglich, wie dies in Fig. 2 zu ersehen ist, daß die Fahrerkabine 9 und der Kastenaufbau 3 über voneinander getrennte Befestigungsvorrichtungen 176, 177 am Fahrzeugrahmen 4 befestigt sind. So ist die Fahrerkabine 9 über die Befestigungsvorrichtungen 176, beispielsweise Metallgummifedern oder ein sonstiges Dämpfungssystem, am Fahrzeugrahmen 4 abgestützt, während der Kastenaufbau 3 unabhängig davon über die Befestigungsvorrichtungen 177 mit dem Fahrzeugrahmen 4 verbunden ist. Die sich aufgrund der unterschiedlichen Befestigungen und deren unterschiedlicher Dämpfungs- und Schwingungscharakteristik ergebenden räumlichen Verlagerungen zwischen der Fahrerkabine 9 und dem Kastenaufbau 3 werden, wie bereits einleitend anhand der Fig. 6 bis 9 erläutert, durch das Übergangs- und Dichtelement 41 ausgeglichen und eine dichtende Verbindung zwischen der Fahrerkabine 9 und dem Kastenaufbau 3 hergestellt.

Durch die Ausbildung der Tiefräume 47 ist es in einfacher Weise, wie beispielsweise aus der schematischen Darstellung in Fig. 6 ersichtlich, möglich, eine Aufstiegstreppe 178 zum leichteren Zugang zu der im Kastenaufbau 3 angeordneten Mannschaftskabine 29 in diesem Tiefraum 47 anzuordnen, wobei dann die Aufstiegstreppe 178 innerhalb der Tür 43 sich befindet.

Dies hat den Vorteil, daß auch bei schwierigen Einsatzverhältnissen, insbesondere im Winter bei Schnee und Eis die Aufstiegstreppe 178 geschützt angeordnet ist und eine Vereisung verhindert wird. Damit ist auch ein sicheres Begehen dieser Aufstiegstreppe 178, vor allem für diejenigen Einsatzkräfte, die mit schweren Geräten, wie Atemschutzgeräte, ausgerüstet sind, ohne Gefahr möglich. Dazu kommt, daß auch im Innenraum eine entsprechende Beleuchtung eingebaut werden kann.

Wie schließlich in Fig. 4 gezeigt ist es möglich, im Bereich der Ausnehmung 56 im Randbereich 57 des Kastenaufbaues 3, beispielsweise oberhalb einer Lager- und Antriebsvorrichtung 36 für die Rolläden 35 eine Lichtquelle, beispielsweise eine Leuchtstoffröhre 179 anzuordnen, wobei eine Vorfeld- oder Außenbeleuchtung rund um das Einsatzfahrzeug 1 bzw. dem Kastenaufbau 3 dadurch sichergestellt werden kann, daß in der Seitenwand 39 eine durchsichtige Scheibe 180, beispielsweise aus Plexiglas, angeordnet ist. Gleichermaßen ist es auch möglich, auch den der Dachtragplatte 22 zwischen den beiden Randbereichen 57 angeordneten Bereich dadurch auszuleuchten, daß entsprechende Schlitze 181 vorgesehen sein können, die beispielsweise ebenfalls mit Glas oder Plexiglas abgedeckt sind, sodaß ein Teil des Lichtes der Leuchtstoffröhre 179 auch den Dachbereich des Kastenaufbaues 3 beleuchtet.

Dadurch kann die Zugänglichkeit zu den Ausrüstungsgegenständen sowie die Unfallgefahr für die Einsatzkräfte im Bereich des Einsatzfahrzeuges 1 erheblich vermindert werden.

Abschließend wird darauf hingewiesen, daß zum besseren Verständnis der Erfindung einzelne Teile und Bauelemente unproportional und unmaßstäblich verzerrt dargestellt werden.

Es kann auch jedes einzelne der dargestellten Ausführungsbeispiele eine eigene erfinderische Lösung bilden bzw. können auch einzelne Merkmalsgruppen einzelner Ausführungsbeispiele sowie einzelne Merkmale oder Merkmalsgruppen verschiedener Ausführungsbeispiele in Kombination miteinander eigenständige, erfindungsgemäße Lösungen bilden.

### Bezugszeichenaufstellung

- 1: Einsatzfahrzeug
- 2: Fahrzeugchassis
- 3: Kastenaufbau
- 4: Fahrzeugrahmen
- 5: Federelement
- 6: Fahrachse
- 7: Fahrachse
- 8: Rad
- 9: Fahrerkabine
- 10: Pfeil
- 11: Fahrzeuglängsachse
- 12: Horizontaltragelement
- 13: Abstand
- 14: Abstand
- 15: Abstand
- 16: Quertragelement
- 17: Quertragelement
- 18: Quertragelement
- 19: Aufstandsfläche
- 20: Länge
- 21: Schenkel
- 22: Dachtragplatte
- 23: Aufbaulänge
- 24: Längsstützelement
- 25: Diagonalstützelement
- 26: Vertikaltrennelement
- 27: Ausrüstungskasten bzw. -abteil
- 28: Ausrüstungskasten bzw. -abteil
- 29: Mannschaftskabine
- 30: Bereich
- 31: Durchsetzung
- 32: Führungs- bzw. Verstärkungsbereich
- 33: Blechprofil
- 34: Türanordnung
- 35: Rolladen
- 36: Lager- und Antriebsvorrichtung
- 37: Längsbereich
- 38: Seitenwand
- 39: Seitenwand
- 40: Wandstärke
- 41: Übergangs- und Dichtelement
- 42: Tür
- 43: Tür
- 44: Abstand
- 45: Durchmesser
- 46: Oberkante
- 47: Tiefraum
- 48: Bodenfläche
- 49: Stromaggregat
- 50: Schwenkfach
- 51: Schwenkachse
- 52: Schwenkklappe
- 53: Auftrittsplattform
- 54: Basis
- 55: Montagegehäuse
- 56: Ausnehmung
- 57: Randbereich
- 58: Längsseite
- 59: Führungsleiste
- 60: Stirnseitenkante
- 61: Lageranordnung
- 62: Längsseitenkante
- 63: Bauhöhe
- 64: Tank
- 65: Tankkammer
- 66: Tankkammer
- 67: Durchgangsöffnung
- 68: Seitenwand
- 69: Seitenwand
- 70: Basisfläche
- 71: Seitenfläche
- 72: Seitenfläche
- 73: Steg
- 74: Außenseite
- 75: Höhe
- 76: Horizontaltrennelement
- 77: Ausrüstungsgegenstand
- 78: Verteiler
- 79: Rückwand
- 80: Durchgangsöffnung
- 81: Öffnung
- 82: Verstärkungsrahmen
- 83: Führungs- und Dämpfungsvorrichtung
- 84: Führungs- bzw. Dämpfungselement
- 85: Führungs- bzw. Dämpfungselement
- 86: Aufnahmeöffnung
- 87: Dämpfungselement
- 88: Wegstrecke
- 89: Längsprofil
- 90: Durchsetzung
- 91: Befestigungslasche
- 92: Befestigungslasche
- 93: Auflagefläche
- 94: Aufnahmeschlitz
- 95: Ausnehmung
- 96: Klappe
- 97: Kontrollampe
- 98: Stirnkante
- 99: Durchsetzung
- 100: Abkantung
- 101: Mittelsteg
- 102: Stützfläche
- 103: Stützelement
- 104: Fortsatz
- 105: Stützfläche
- 106: Kernteil
- 107: Längsträger
- 108: Hilfsrahmen
- 109: Knotenversteifungselement
- 110: Versteifungselement
- 111: Kleberschicht
- 112: Mannloch
- 113: Blechprofilteil
- 114: Versteifungselement
- 115: Stützplatte
- 116: Ausnehmung
- 117: Blechteil
- 118: Schenkel
- 119: Einzelteil
- 120: Einzelteil
- 121: Knotenversteifungselement
- 122: Längsprofil
- 123: Stirnkante
- 124: Stirnkante
- 125: Stirnkante
- 126: Seitenwand
- 127: Querträger
- 128: Kleberschicht
- 129: Bauteil
- 130: Bauteil
- 131: Befestigungsmittel
- 132: Quersteg
- 133: Längssteg
- 134: Längssteg
- 135: Breite
- 136: Seitensteg
- 137: Randleiste
- 138: Stützteil
- 139: Randleistenteil
- 140: Bohrung
- 141: Stützelement
- 142: Stützprofil
- 143: Fortsatz
- 144: Versteifungselement
- 145: Sicke
- 146: Verkleidungselement
- 147: Heckklappe
- 148: Scharnieranordnung
- 149: Seitenteil
- 150: Durchbruch
- 151: Sandwichelement
- 152: Decklage
- 153: Decklage
- 154: Kern
- 155: Formbauteil
- 156: Formbauteil
- 157: Formbauteil
- 158: Stirnwand
- 158: Ausnehmung
- 160: Seitenwand
- 161: Stirnwand
- 162: Grundplatte
- 163: Aufnahmeraum
- 164: Aufnahmebohrung
- 165: Verstärkungselement
- 166: Befestigungsflansch
- 167: Bohrung
- 168: Durchbruch
- 169: Wandteil
- 170: Verstärkungselement
- 171: Schwenklagerung
- 172: Tragprofil
- 173: Halterungsnut
- 174: Nutenstein
- 175: Traggestell
- 176: Befestigungsvorrichtung
- 177: Befestigungsvorrichtung
- 178: Aufstiegstreppe
- 179: Leuchtstoffröhre
- 180: Scheibe
- 181: Schlitz

## Patentansprüche

1. Selbsttragender Kastenaufbau für Einsatzfahrzeuge, insbesondere Feuerwehrfahrzeuge zur Aufnahme von Rettungs- und/oder Löschvorrichtungen und gegebenenfalls von Löschmitteln und/oder Löschmittelpumpen in mehreren von außen über unterschiedliche Türanordnungen zugängliche Ausrüstungskästen bzw. -abteile, dadurch gekennzeichnet, daß der selbsttragende Kastenaufbau (3) ein Horizontaltragelement (12) aufweist, die in einer zu einer Fahrzeuglängsachse (11) senkrechten Ebene mit einem im wesentlichen U- bzw. hutprofilartigen Querschnitt ausgebildet ist und auf der in Richtung der Fahrzeuglängsachse (11) im Abstand (13 bis 15) voneinander und senkrecht zu dieser zumindest drei Quertragelemente (16 bis 18) angeordnet sind, die von einer Basis (54) des Horizontaltragelementes (12) in Richtung einer Aufstandsfläche (19) um eine Länge (20) die Basis (54) des Horizontaltragelementes (12) überragt.

2. Selbsttragender Kastenaufbau nach Anspruch 1, dadurch gekennzeichnet, daß der Bauteil (129, 130) als einlagiges Blechelement aus Stahl oder Aluminium ausgebildet ist.

3. Selbsttragender Kastenaufbau nach Anspruch 1 oder 2, dadurch gekennzeichnet, daß der Bauteil (129, 130) durch ein Sandwichelement (151) mit zwei Decklagen (152, 153) und einem Kern (154) aus Kunststoff bzw. Kunststoffschaum oder einer Wabe, insbesondere einer Aluminiumwabe, gebildet ist.

4. Selbsttragender Kastenaufbau nach einem oder mehreren der Ansprüche 1 bis 3, dadurch gekennzeichnet, daß die Quertragelemente (16 bis 18) mit einem sich über die Aufbaulänge (23) erstreckenden Längsstützelement (24), beispielsweise des Horizontaltragelementes (12) und/oder der Dachtragplatte (22) oder einem weiteren Quertragelement (17), über ein durch zumindest ein Blechprofilteil gebildetes Diagonalstützelement (25) verbunden sind.

5. Selbsttragender Kastenaufbau nach einem oder mehreren der Ansprüche 1 bis 4, dadurch gekennzeichnet, daß ein stirnseitiges Quertragelement (16) des Kastenaufbaues (3) einer Rückwand der Fahrerkabine (9) unmittelbar benachbart und parallel zu dieser verlaufend angeordnet ist.

6. Selbsttragender Kastenaufbau nach einem oder mehreren der Ansprüche 1 bis 5, dadurch gekennzeichnet, daß eine Querschnittsform des Kastenaufbaues (3) im Bereich eines stirnseitigen Quertragelementes (16) an eine senkrecht zur Fahrzeuglängsachse (11) ausgerichtete Querschnittsform der Fahrerkabine (9) angepaßt ist und daß zwischen der Fahrerkabine (9) und dem Kastenaufbau (3) im Bereich der Seitenwände (38, 39) und der Dachtragplatte (22) und/oder dem diesen unmittelbar benachbarten Quertragelement ein umlaufendes elastisches Verbindungselement angeordnet ist.

7. Selbsttragender Kastenaufbau nach einem oder mehreren der Ansprüche 1 bis 6, dadurch gekennzeichnet daß die Quertragelemente (16 bis 18) in ihren dem Horizontaltragelement (12) und/oder der Dachtragplatte (22) zugewandten Stirnendbereichen mit winkelig dazu verlaufenden Stützelementen (141) bzw. Stützprofilen (142) versehen sind.

8. Selbsttragender Kastenaufbau nach einem oder mehreren der Ansprüche 1 bis 7, dadurch gekennzeichnet, daß zumindest ein Quertragelement (17) mit einem Durchbruch (168), insbesondere mit einer Ausklinkung, deren Wandteil (169) unter einem Winkel von in etwa 90° zum Quertragelement (17) abgekantet ist, versehen ist und ein Knotenversteifungselement (121) ein Versteifungselement (110, 144) den Durchbruch (168) durchragt und mit dem Vertikaltrennelement (26) beidseits zumindest eines Quertragelementes (17) kraft- und/oder formschlüssig verbunden ist.

9. Selbsttragender Kastenaufbau nach einem oder mehreren der Ansprüche 1 bis 8, dadurch gekennzeichnet, daß das Quertragelement (16 bis 18) mit einem parallel zu einer dem Horizontaltragelement (12) zugeordneten Aufstandsfläche verlaufenden Versteifungselement (110, 144) versehen ist.

10. Selbsttragender Kastenaufbau nach einem oder mehreren der Ansprüche 1 bis 9, dadurch gekennzeichnet, daß die Versteifungselemente (110, 144) durch insbesondere längsprofilartig gekantete Blechteile oder Profile gebildet sind.

11. Selbsttragender Kastenaufbau nach einem oder mehreren der Ansprüche 1 bis 10, dadurch gekennzeichnet, daß die Versteifungselemente (110, 144) durch Durchsetzungen bzw. Sicken (145) gebildet sind.

12. Selbsttragender Kastenaufbau nach einem oder mehreren der Ansprüche 1 bis 11, dadurch gekennzeichnet, daß beidseits der hinteren Fahrachse (7) bzw. Hinterachsen je ein Quertragelement (17) angeordnet ist und in Richtung der Fahrerkabine (9) zumindest zwei weitere Quertragelemente (16, 17) und in der von der Fahrerkabine (9) abgewendeten Richtung zumindest ein weiteres Quertragelement (18) jeweils mit Abstand (13 bis 15) voneinander angeordnet ist.

13. Selbsttragender Kastenaufbau nach einem oder mehreren der Ansprüche 1 bis 12 dadurch gekennzeichnet, daß das heckseitige Quertragelement (18) einen Aufnahmebereich, z. B. einen Mittelsteg (101), für eine Heckklappe (147) aufweist, der senkrecht zum Quertragelement (18) in Fahrtrichtung versetzt und mit einem Durchbruch (150) versehen ist.

14. Selbsttragender Kastenaufbau nach einem oder mehreren der Ansprüche 1 bis 13, dadurch gekennzeichnet, daß Führungsleisten (59) für die in Fahrzeuglängsrichtung distanzierten Stirnkanten vom Rolladen (35) auf den einander in Fahrtrichtung unmittelbar benachbarten Quertragelementen (16 bis 18) auf den einander zugewandten Seitenflächen angeordnet sind.

15. Selbsttragender Kastenaufbau nach einem oder mehreren der Ansprüche 1 bis 14 dadurch gekennzeichnet, daß die Quertragelemente (16 bis 18) mit senkrecht zur Basis (54) bzw. parallel zu den Schenkein (21) des Horizontaltragelementes (12) verlaufenden, vertikalen, nutförmig durchsetzten Führungs- bzw. Verstärkungsbereichen (32) mit bevorzugt U-förmigem Querschnitt versehen sind.

16. Selbsttragender Kastenaufbau nach einem oder mehreren der Ansprüche 1 bis 15, dadurch gekennzeichnet, daß die nutförmigen Führungs- bzw. Verstärkungsbereiche (32) der Quertragelemente (16 bis 18) zweier in Richtung der Fahrzeuglängsachse (11) einander unmittelbar benachbarter Quertragelemente (16 bis 18), mit ihren von der Basisfläche (70) vorragenden Seitenflächen (71, 72) oder mit ihrer über die Quertragelemente (16 bis 18) vorragenden Basisfläche (70) aufeinander zu gerichtet sind.

17. Selbsttragender Kastenaufbau nach einem oder mehreren der Ansprüche 1 bis 16, dadurch gekennzeichnet, daß das Quertragelement (16 bis 18) durch einen mehrfach gekanteten ebenflächigen Blechzuschnitt gebildet ist und zumindest in Teilbereichen, beispielsweise zwischen den Führungs- bzw. Verstärkungsbereichen (32) winkelig dazu verlaufende Stützelemente (141) bzw. Fortsätze (143) angeformt sind.

18. Selbsttragender Kastenaufbau nach einem oder mehreren der Ansprüche 1 bis 17, dadurch gekennzeichnet, daß im Bereich der Führungs- bzw. Verstärkungsbereiche (32) angeordnete Fortsätze (143) an der Basisfläche (70) einstückig angeformt und in die den Seitenflächen (71, 72) entgegengesetzte Richtung abgekantet bzw. umgebogen sind.

19. Selbsttragender Kastenaufbau nach einem oder mehreren der Ansprüche 1 bis 18, dadurch gekennzeichnet, daß ein platten- bzw. profilförmiges Vertikaltrennelement (26) zwischen zwei Quertragelementen (16 bis 18) angeordnet und mit diesen verbunden ist.

20. Selbsttragender Kastenaufbau nach einem oder mehreren der Ansprüche 1 bis 19, dadurch gekennzeichnet, daß ein Vertikaltrennelement (26) in die nutförmigen Führungs- bzw. Verstärkungsbereiche (32) mit seinen Stirnseiten eingreift und in diesen in Richtung quer zur Fahrzeuglängsachse (11) durch die Seitenflächen (71, 72) und in Längsrichtung durch die Basisfläche (70) derselben geführt bzw. gehaltert ist.

21. Selbsttragender Kastenaufbau nach einem oder mehreren der Ansprüche 1 bis 20, dadurch gekennzeichnet, daß die Vertikaltrennelemente (26) zwischen zwei Quertragelementen (16 bis 18) sich nur über einen Teil der in etwa senkrecht zur eine Bodenplatte bildenden Basis (54) verlaufenden Höhe der Quertragelemente (16 bis 18) erstrecken.

22. Selbsttragender Kastenaufbau nach einem oder mehreren der Ansprüche 1 bis 21, dadurch gekennzeichnet, daß das Vertikaltrennelement (26) durch einen ebenflächigen bzw. U- oder C-förmigen Blechteil oder Sandwichelement (151) gebildet ist.

23. Selbsttragender Kastenaufbau nach einem oder mehreren der Ansprüche 1 bis 22, dadurch gekennzeichnet, daß das Vertikaltrennelement (26) mit Versteifungselementen (110), beispielsweise Profile mit U- bzw. C- oder hutprofilförmigem Querschnitt, verbunden ist.

24. Selbsttragender Kastenaufbau nach einem oder mehreren der Ansprüche 1 bis 23, dadurch gekennzeichnet, daß die Versteifungselemente (144) durch vorzugsweise längliche Durchsetzungen, bevorzugt Sicken (145) mit z.B. U- oder V- oder trapezförmigem Querschnitt, gebildet sind.

25. Selbsttragender Kastenaufbau nach einem oder mehreren der Ansprüche 1 bis 24, dadurch gekennzeichnet, daß die Versteifungselemente (114) der Vertikaltrennelemente (26) in in etwa senkrecht zu den Quertragelementen (16 bis 18) verlaufender Richtung ausgerichtet sind.

26. Selbsttragender Kastenaufbau nach einem oder mehreren der Ansprüche 1 bis 25, dadurch gekennzeichnet, daß in senkrecht zum Horizontaltragelement (12) verlaufender Richtung übereinander angeordnete Vertikaltrennelemente (26) über ein senkrecht zu deren Oberfläche ausgerichtetes Versteifungselement (114) verbunden sind.

27. Selbsttragender Kastenaufbau nach einem oder mehreren der Ansprüche 1 bis 26, dadurch gekennzeichnet, daß das Versteifungselement (114) einen L-förmigen Querschnitt aufweist und ein Schenkel des Versteifungselementes (114), z. B. dessen Stützplatten (115), mit je einer Oberfläche der einander benachbarten Vertikaltrennelemente (26) flächig, insbesondere über eine Kleberschicht (128) verbunden ist.

28. Selbsttragender Kastenaufbau nach einem oder mehreren der Ansprüche 1 bis 27, dadurch gekennzeichnet, daß zwischen den beiden mit den Vertikaltrennelementen (26) verbundenen Stützplatten (115) eine Ausnehmung (116) für die hochgekanteten Randbereiche bzw. Stege (73) derselben angeordnet ist.

29. Selbsttragender Kastenaufbau nach einem oder mehreren der Ansprüche 1 bis 28, dadurch gekennzeichnet, daß das Horizontaltragelement (12) im Querschnitt aus mehreren parallel zueinander verlaufenden, miteinander verbundenen Einzelteilen (119, 120) gebildet ist.

30. Selbsttragender Kastenaufbau nach einem oder mehreren der Ansprüche 1 bis 29, dadurch gekennzeichnet, daß zwischen den zueinander in Längsrichtung des Kastenaufbaues (3) parallel verlaufenden Einzelteilen (119, 120) oder im Bereich der Stirnkanten (123) zwischen der Basis (54) und den Schenkeln (21) des Horizontaltragelementes (12) ein Knotenversteifungselement (121), beispielsweise ein Längsprofil (122) mit U- bzw. C- oder hohlprofilförmigem Querschnitt angeordnet ist.

31. Selbsttragender Kastenaufbau nach einem oder mehreren der Ansprüche 1 bis 30, dadurch gekennzeichnet, daß das Knotenversteifungselement (121) durch je ein im Bereich der beiden Stirnkanten (123) zwischen der Basis (54) und dem Schenkel (21) des Horizontaltragelementes (12) angeordnetes Längsprofil (122). z. B. ein Hohlprofil, gebildet ist und daß die Längsprofile (122) in ihrer Längsrichtung mit in Abstand voneinander angeordneten, quer zu deren Längsrichtung verlaufenden Querträgern (127) kraft- und/oder formschlüssig verbunden sind und daß vorzugsweise die Längsprofile (122) aus Stahl bestehen.

32. Selbsttragender Kastenaufbau nach einem oder mehreren der Ansprüche 1 bis 31, dadurch gekennzeichnet, daß das Knotenversteifungselement (121) zwei parallel zueinander über einen Quersteg voneinander der Höhe nach distanzierte Längsstege (133, 134) aufweist und einer der Längsstege (133) eine geringere Breite (135) aufweist als der weitere Längssteg (134) und an den eine größere Breite aufweisenden Längssteg (134) an der vom Quersteg (132) abgewendeten Seite ein Seitensteg (136) anschließt, der mit einer zu diesem winkelig, jedoch parallel zu dem eine geringere Breite (135) aufweisenden Längssteg (133) vorspringenden Randleiste (137) versehen ist.

33. Selbsttragender Kastenaufbau nach einem oder mehreren der Ansprüche 1 bis 32, dadurch gekennzeichnet, daß aus dem Seitensteg (136) und der Randleiste (137) über einen Teil der Länge des Knotenversteifungselementes (121) ein Stützteil (138) ausgeklinkt und in Richtung des Quersteges (132) unter einem Winkel nach innen geneigt ist, sodaß ein Randleistenteil (139) über dessen Breite an einer Unterseite des kürzeren Längsstegs (133) anliegt.

34. Selbsttragender Kastenaufbau nach einem oder mehreren der Ansprüche 1 bis 33, dadurch gekennzeichnet, daß der Randleistenteil (139) sowie der Längssteg (133) mit der geringeren Breite (135) und der Längssteg (134) mit einer senkrecht zu ihrer Oberfläche ausgerichteten Bohrung (140) durchsetzt sind.

35. Selbsttragender Kastenaufbau nach einem oder mehreren der Ansprüche 1 bis 34, dadurch gekennzeichnet, daß das Horizontaltragelement (12) und/oder die Dachtragplatte (22) und/oder die Quertragelemente (16 bis 18) und/oder die Vertikaltrennelemente (26) über Kleberschichten (128) miteinander verbunden sind.

36. Selbsttragender Kastenaufbau nach einem oder mehreren der Ansprüche 1 bis 35, dadurch gekennzeichnet, daß das Horizontaltragelement (12) und/oder die Dachtragplatte (22) und/oder die Quertragelemente (16 bis 18) und/oder die Vertikaltrennelemente (26) über mechanische Befestigungsmittel (131), z.B. Nieten oder Klemmschraubverbindungen. miteinander verbunden sind.

37. Selbsttragender Kastenaufbau nach einem oder mehreren der Ansprüche 1 bis 36, dadurch gekennzeichnet, daß ein Horizontaltrennelement (76) zwischen den hochgekanteten Randbereichen bzw. Stegen (73) zweier einander unmittelbar benachbarte Vertikaltrennelemente (26) angeordnet ist.

38. Selbsttragender Kastenaufbau nach einem oder mehreren der Ansprüche 1 bis 37, dadurch gekennzeichnet, daß Horizontaltrennelemente (76) zwischen zwei einander unmittelbar benachbarte Quertragelementen (16 bis 18) in bzw. auf den Versteifungselementen (110, 144) abgestützt bzw. geführt sind.

39. Selbsttragender Kastenaufbau nach einem oder mehreren der Ansprüche 1 bis 38, dadurch gekennzeichnet, daß Horizontaltrennelemente (76), die beidseits eines Quertragelementes (16 bis 18) sich in Richtung auf die von diesen voneinander distanzierten weiteren beiden Quertragelemente (16 bis 18) erstrecken, in unterschiedlichem Abstand von dem Horizontaltragelement (12) angeordnet sind.

40. Selbsttragender Kastenaufbau nach einem oder mehreren der Ansprüche 1 bis 39, dadurch gekennzeichnet, daß das Horizontaltrennelemente (76) eine Trennwand zwischen einem Innenraum einer Tankkammer (65) und vorzugsweise eine von dem Innenraum der Tankkammer (65) abgewandte Oberfläche des Horizontaltrennelementes (76) als Fachboden ausgebildet ist.

41. Selbsttragender Kastenaufbau nach einem oder mehreren der Ansprüche 1 bis 40, dadurch gekennzeichnet, daß die Horizontaltrennelemente (76) mit Versteifungselementen (110, 144) versehen sind.

42. Selbsttragender Kastenaufbau nach einem oder mehreren der Ansprüche 1 bis 41, dadurch gekennzeichnet, daß die Horizontaltrennelemente (76) Fachböden für Ausrüstungsgegenstände (77) bzw. Löschmittel bilden.

43. Selbsttragender Kastenaufbau nach einem oder mehreren der Ansprüche 1 bis 42, dadurch gekennzeichnet, daß auf der von dem Horizontaltragelement (12) abgewendeten Stirnseite der Quertragelemente (16 bis 18) parallel zu dieser eine bevorzugt selbsttragende Dachtragplatte (22) angeordnet ist.

44. Selbsttragender Kastenaufbau nach einem oder mehreren der Ansprüche 1 bis 43, dadurch gekennzeichnet, daß das Längsstützelement (24) durch einen Blechprofilteil (113), z.B. durch ein im Längsseitenrandbereich der Dachtragplatte (22) angeordnetes Längs- insbesondere Längshohlprofil, gebildet ist.

45. Selbsttragender Kastenaufbau nach einem oder mehreren der Ansprüche 1 bis 44, dadurch gekennzeichnet, daß die Fahrerkabine (9) und der Kastenaufbau (3) über voneinander unabhängige Befestigungsvorrichtungen (176, 177) mit dem Fahrzeugrahmen (4) verbunden sind.

46. Selbsttragender Kastenaufbau nach einem oder mehreren der Ansprüche 1 bis 45, dadurch gekennzeichnet, daß zwischen der Fahrerkabine (9), insbesondere deren Rückwand (79) und dem Kastenaufbau (3), insbesondere dessen der Rückwand (79) der Fahrerkabine (9) zugeordneten stirnseitigen Quertragelement (16), eine elastisch oder elastoplastisch verformbare Führungs- und Dämpfungsvorrichtung (83) z.B. Begrenzungsanschläge mit z.B. stark progressiver Federkennlinie angeordnet sind.

47. Selbsttragender Kastenaufbau nach einem oder mehreren der Ansprüche 1 bis 46, dadurch gekennzeichnet, daß das umlaufende elastische Übergangs- und Dichtelement (41) durch eine räumlich verformbare Hülle. z. B. ein Längsprofil (89), gebildet ist.

48. Selbsttragender Kastenaufbau nach einem oder mehreren der Ansprüche 1 bis 47, dadurch gekennzeichnet, daß das Übergangs- und Dichtelement (41) durch ein zumindest die Dachtragplatte (22) und gegebenenfalls die Seitenwände (38, 39) eines Kastenaufbaues (3) abdeckendes Längsprofil (89) aus elastischem Material gebildet ist und im Bereich der Längsseitenkanten verlaufende, einen Aufnahmeschlitz (94) begrenzende Befestigungslaschen (91, 92), z. B.Randleisten, zur Fixierung und Halterung des Übergangs- und Dichtelementes (41) auf der Fahrerkabine (9) und/oder dem dieser unmittelbar benachbarten Quertragelement (16) angeordnet ist.

49. Selbsttragender Kastenaufbau nach einem oder mehreren der Ansprüche 1 bis 48, dadurch gekennzeichnet, daß zwischen der Fahrerkabine (9) und dem Kastenaufbau (3), insbesondere dem der Fahrerkabine (9) unmittelbar benachbarten Quertragelement (16), eine räumliche Führungs- und Dämpfungsvorrichtung (83) angeordnet ist, welche sowohl in Richtung senkrecht zum Quertragelement (16) als auch in einer zum Quertragelement (16) parallelen Ebene gegen die Rückstellkraft eines Federelementes verstellbar ist.

50. Selbsttragender Kastenaufbau nach einem oder mehreren der Ansprüche 1 bis 49, dadurch gekennzeichnet, daß die Führungs- und Dämpfungsvorrichtung (83) aus zumindest einem mit der Fahrerkabine (9) und einem mit dem Kastenaufbau (3) bewegungsverbundenen Führungs- bzw. Dämpfungselement (84, 85) besteht, wobei ein äußeres Führungs- bzw. Dämpfungselement (85) eine Aufnahmeöffnung (86) für das andere innere Führungs- bzw. Dämpfungselement (84) aufweist und eine Querschnittsform des inneren Führungs- bzw. Dämpfungselementes (84) einer Querschnittsform der Aufnahmeöffnung (86) des äußeren Führungs- bzw. Dämpfungselementes (85) angepaßt ist und zumindest eines der beiden Führungs- bzw. Dämpfungselemente (84, 85) aus einem elastisch verformbaren und rückstellbaren Material, beispielsweise einem Kunststoff oder Gummi oder dgl., gebildet ist.

51. Selbsttragender Kastenaufbau nach einem oder mehreren der Ansprüche 1 bis 50, dadurch gekennzeichnet, daß die Aufnahmeöffnung (86) im Führungs- bzw. Dämpfungselement (85) als Kegelstumpf mit sich in Richtung seiner Befestigungsfläche verjüngenden Querschnitt ausgebildet ist und das innere Führung- bzw. Dämpfungselement (84) einen gleichen oder geringfügig kleineren Querschnitt aufweist.

52. Selbsttragender Kastenaufbau nach einem oder mehreren der Ansprüche 1 bis 51, dadurch gekennzeichnet, daß zwischen zwei in Längsrichtung des Kastenaufbaues (3) einander unmittelbar benachbart angeordneten Quertragelementen (16, 17) eine Mannschaftskabine (29) angeordnet ist, die über eine Öffnung (81) im stirnseitigen Quertragelement (16) und eine diese zumindest bereichsweise überdeckend angeordnete Durchgangsöffnung (80) in der Rückwand (79) der Fahrerkabine (9) mit dem Innenraum der Fahrerkabine (9) verbunden ist.

53. Selbsttragender Kastenaufbau nach einem oder mehreren der Ansprüche 1 bis 52, dadurch gekennzeichnet, daß in den Seitenwänden (38, 39) der Mannschaftskabine (29) Türen (43) mit Aufstiegstreppen (178) angeordnet sind.

54. Selbsttragender Kastenaufbau nach einem oder mehreren der Ansprüche 1 bis 53, dadurch gekennzeichnet, daß die Aufstiegstreppe (178) in eine in sich über eine Länge (20) der Schenkel (21) des Horizontaltragelementes (12) in Richtung der Aufstandsfläche (19) erstreckenden Tiefraum (47) innerhalb der Seitenwand (38, 39) des Kastenaufbaues (3) angeordnet ist.

55. Selbsttragender Kastenaufbau nach einem oder mehreren der Ansprüche 1 bis 54, dadurch gekennzeichnet, daß ein Diagonalstützelement (25) durch ein Knotenelement gebildet ist, welches eine dem Quertragelement (16 bis 18) und dem Längsstützelement (24) zugewandte Schenkellänge von zumindest 300 mm aufweist.

56. Selbsttragender Kastenaufbau nach einem oder mehreren der Ansprüche 1 bis 55, dadurch gekennzeichnet daß zwischen den Quertragelementen (16 bis 18) und/oder den Vertikaltrennelementen (26) und/oder den Horizontaltrennelementen (76) Formbauteile (155 bis 157), insbesondere räumlich verformte Blechzuschnitte oder Bauteile aus glasfaserverstärktem Kunststoff angeordnet sind.

57. Selbsttragender Kastenaufbau nach einem oder mehreren der Ansprüche 1 bis 56, dadurch gekennzeichnet, daß das Horizontaltragelement (12) in zu den Stirnkanten (123) zwischen der Basis (54) und den Schenkel (21) parallel verlaufender Längsrichtung aus mehreren Bauteilen (129, 130) besteht und daß diese Bauteile (129, 130) vorzugsweise in den Quertragelemente (16 bis 18) benachbarten Bereichen miteinander verbunden sind und gegebenenfalls einander überlappen.

58. Selbsttragender Kastenaufbau nach einem oder mehreren der Ansprüche 1 bis 57, dadurch gekennzeichnet daß eine Schwenkachse (51) für ein Schwenkfach (50) mit einer Befestigungsplatte bzw. einem Tragprofil (172) verbunden ist und die Befestigungsplatte bzw. das Tragprofil (172) in mehreren voneinander distanzierten Bereichen über Befestigungsmittel (131) mit einem Quertragelement (16 bis 18) verbunden oder vollflächig verklebt ist.

59. Selbsttragender Kastenaufbau nach einem oder mehreren der Ansprüche 1 bis 58, dadurch gekennzeichnet daß im Bereich der Befestigungsmittel (131), insbesondere in den versenkten Führungs- bzw. Verstärkungsbereichen (32) Verstärkungselemente (170) zur Aufnahme der Befestigungsmittel (131) angeordnet sind.

60. Selbsttragender Kastenaufbau nach einem oder mehreren der Ansprüche 1 bis 59, dadurch gekennzeichnet, daß im Bereich der Quertragelemente (16 bis 18) und/ oder im Eckbereich zwischen den Quertragelementen (16 bis 18) und den Vertikaltrennelementen (26) Tragprofile (172), insbesondere Aluminiumprofile und/oder durchgesetzte oder abgekantete Wandteile (169) der Quertragelemente (16 bis 18) oder Vertikaltrennelemente (26) angeordnet sind, die mit Aufnahmeöffnungen bzw. Halterungsnuten (173) zur Aufnahme von Befestigungsmitteln (131) für Ausrüstungsgegenstände (77), insbesondere Schwenkachsen (51) von Schwenkfächern (50), versehen sind.

## Claims

1. Self-supporting box structure for utility vehicles, particularly firefighting vehicles, for accommodating life-saving and/or extinguishing devices and if necessary extinguishing substances and/or pumps for extinguishing substances in a plurality of equipment boxes or com- partments accessible from the outside via various door arrangements, characterised in that the self-supporting box structure (3) has a horizontal support element (12), which is designed in a plane perpendicular to a vehicle longitudinal axis (11) with a substantially U- or hat-shaped profiled cross-section, and on which are arranged in the direction of the vehicle longitudinal axis (11) at a spacing (13 to 15) from one another and perpendicular thereto at least three transverse support elements (16 to 18), which from a base (54) of the horizontal support element (12) project in the direction of a support surface (19) by a length (20) over the base (54) of the horizontal support element (12),

2. Self-supporting box structure according to Claim 1, characterised in that the component (129, 130) is designed as a single-layer sheet metal element of steel or aluminium.

3. Self-supporting box structure according to Claim 1 or 2, characterised in that the component (129, 130) is formed by a sandwich element (151) with two cover layers (152, 153) and a core (154) made of plastic or plastic foam or a honeycomb structure, in particular an aluminium honeycomb.

4. Self-supporting box structure according to one or more of Claims 1 to 3, characterised in that the transverse support elements (16 to 18) are connected to a longitudinal support element (24) extending over the constructive length (23), for example of the horizontal support element (12) and/or of the roof support panel (22) or a further transverse support element (17) by means of a diagonal support element (25) formed by at least one profiled sheet metal part.

5. Self-supporting box structure according to one or more of Claims 1 to 4, characterised in that an end-side transverse support element (16) of the box structure (3) is arranged in the immediate vicinity of a rear wall of the driver's cab (9) and extending parallel thereto.

6. Self-supporting box structure according to one or more of Claims 1 to 5, characterised in that a cross-sectional shape of the box structure (3) in the region of an end transverse support element (16) is adapted to a cross-sectional shape of the driver's cab (9) aligned perpendicularly to the vehicle longitudinal axis (11), and in that there is arranged between the driver's cab (9) and the box structure (3) in the region of the side walls (38, 39) and of the roof support panel (22) and/or the transverse support element directly adjacent thereto a surrounding resilient connecting element.

7. Self-supporting box structure according to one or more of Claims 1 to 6, characterised in that the transverse support elements (16 to 18) are provided in their end areas facing the horizontal support element (12) and/or the roof support panel (22), with support elements (141) or support profiles (142) extending at an angle thereto.

8. Self-supporting box structure according to one or more of Claims 1 to 7, characterised in that at least one transverse support element (17) is provided with an aperture (168) in particular with a notch, the wall part (169) of which is bent over at an angle of approximately 90° to the transverse support element (17) and a nodal reinforcing element (121), and a reinforcing element (110, 144) penetrates through the aperture (168) and is connected with the vertical separating element (26) on either side of at least one transverse support element (17) in a non-positive or positive-locking manner.

9. Self-supporting box structure according to one or more of Claims 1 to 8 , characterised in that the transverse support element (16 to 18) is provided with a reinforcing element (110, 144) extending parallel to a support surface associated with the horizontal support element (12).

10. Self-supporting box structure according to one or more of Claims 1 to 9, characterised in that the reinforcing elements (110, 144) are formed in particular by sheet metal parts or profiles which are angled in the manner of a longitudinal profile.

11. Self-supporting box structure according to one or more of Claims 1 to 10, characterised in that the reinforcing elements (110, 144) are formed by passages or beads (145).

12. Self-supporting box structure according to one or more of Claims 1 to 11, characterised in that on either side of the rear vehicle axle (7) or rear axles, there is disposed respectively a transverse support element (17) and, in the direction of the driver's cab (9), at least two further transverse support elements (16, 17) and in the direction facing away from the driver's cab (9) at least one further transverse support element (18) respectively at a spacing (13 to 15) from one another.

13. Self-supporting box structure according to one or more of Claims 1 to 12, characterised in that the rear-side transverse support element (18) has a receiving area, e.g. a central web (101) for a tail gate (147), which is offset in the direction of travel perpendicularly to the transverse support element (18), and is provided with an aperture (150).

14. Self-supporting box structure according to one or more of Claims 1 to 13, characterised in that the guide tracks (59) for the end edges of roller shutters (35) spaced in the longitudinal direction of the vehicle, are mounted on transverse support elements (16 to 18) on the side surfaces facing one another, and in the direct vicinity of one another.

15. Self-supporting box structure according to one or more of Claims 1 to 14, characterised in that the transverse support elements (16 to 18) are provided with vertical, grooved guiding or reinforcement areas (32) with preferably U-shaped cross-section, perpendicular to the base (54) or parallel to the arms (21) of the horizontal support element (12).

16. Self-supporting box structure according to one or more of Claims 1 to 15, characterised in that the groove-shaped guiding or reinforcement areas (32) of the transverse support elements (16 to 18) of two transverse support elements (16 to 18) directly adjacent to one another in the direction of the vehicle longitudinal axis (11) are aligned with their side surfaces (71, 72) projecting from the base surface (70) or with their base surface (70) projecting over the transverse support elements (16 to 18) towards one another.

17. Self-supporting box structure according to one or more of Claims 1 to 16, characterised in that the transverse support element (16 to 18) is formed by a multiple-angle planar sheet metal section, and at least in partial areas, for example between the guiding or reinforcement areas (32), support elements (141) or extensions (143) extending at an angle thereto, are integrally formed.

18. Self-supporting box structure according to one or more of Claims 1 to 17, characterised in that the extensions (143) disposed in the region of the guiding or reinforcement areas (32) are integrally formed as single pieces on the base surface (70) and are angled or bent over in the direction opposite to the side surfaces (71, 72).

19. Self-supporting box structure according to one or more of Claims 1 to 18, characterised in that a panel- or profile- shaped vertical separating element (26) is arranged between two transverse support elements (16 to 18) and is connected thereto.

20. Self-supporting box structure according to one or more of Claims 1 to 19, characterised in that a vertical separating element (26) engages in the groove-shaped guiding or reinforcement areas (32) with its end faces, and is guided or secured therein in a direction perpendicular to the vehicle longitudinal axis (11) by the side surfaces (71, 72) and in the longitudinal direction by the base surface (70) thereof,

21. Self-supporting box structure according to one or more of Claims 1 to 20, characterised in that the vertical separating element (26) extend between two transverse support elements (16 to 18) over only a part of the height of the transverse support elements (16 to 18) extending approximately vertically to a base (54) forming a base plate.

22. Self-supporting box structure according to one or more of Claims 1 to 21, characterised in that the vertical separating element (26) is formed by a planar or U- or C- shaped sheet metal part or sandwich element (151).

23. Self-supporting box structure according to one or more of Claims 1 to 22, characterised in that the vertical separating element (26) is connected to reinforcing elements (110) for example profiles with a U-, C-, or hat- shaped profiled cross-section.

24. Self-supporting box structure according to one or more of Claims 1 to 23, characterised in that the reinforcing elements (144) are formed by preferably elongate passages, preferably beads (145) with e.g. a U-, or V- or trapezoidal cross-section.

25. Self-supporting box structure according to one or more of Claims 1 to 24, characterised in that the reinforcing elements (114) of the vertical separating element (26) are aligned in a direction extending approximately vertically to the transverse support elements (16 to 18).

26. Self-supporting box structure according to one or more of Claims 1 to 25, characterised in that vertical separating elements (26), disposed one above the other in a direction extending perpendicular to the horizontal support element (12), are connected via a reinforcing element (114) aligned perpendicular to their surface.

27. Self-supporting box structure according to one or more of Claims 1 to 26, characterised in that the reinforcing element (114) has an L-shaped cross-section and an arm of the reinforcing element (114), e.g. its support plate (115) is superficially connected with a respective surface of the vertical separating elements (26) adjacent to one another, in particular by an adhesive layer (128).

28. Self-supporting box structure according to one or more of Claims 1 to 27, characterised in that there is disposed between the two support plates (115) connected to the vertical separating elements (26) an aperture (116) for the upwardly-angled lateral areas or webs (73) thereof.

29. Self-supporting box structure according to one or more of Claims 1 to 28, characterised in that the horizontal support element (12) is formed in cross-section from a plurality of individual parts (119, 120) extending parallel to one another and connected together.

30. Self-supporting box structure according to one or more of Claims 1 to 29, characterised in that between the individual parts (119-120) extending parallel to one another in the longitudinal direction of the box structure (3), or in the region of the end edges (123) between the base (54) and the arms (21) of the horizontal support element (12) there is arranged a nodal reinforcing element (121), for example a longitudinal profile (122) with a U-, C- or hollow profile-shaped cross-section.

31. Self-supporting box structure according to one or more of Claims 1 to 30, characterised in that the nodal reinforcing element (121) is formed by a longitudinal profile (122), formed in the area of the two end edges (123) between the base (54) and the arm (21) of the horizontal support element (12), e.g. a hollow profile, and in that the longitudinal profiles (122) are connected in a non-positive and/or positive fashion in the longitudinal direction with transverse carriers (127) extending transversely to their longitudinal direction and spaced apart, and in that the longitudinal profiles (122) are preferably made of steel.

32. Self-supporting box structure according to one or more of Claims 1 to 31, characterised in that the nodal reinforcing element (121) has two longitudinal webs (133, 134) spaced from one another and parallel to one another via a transverse web according to height, and one of the longitudinal webs (133) is of lesser width (135) than the other longitudinal web (134) and connecting with the longitudinal web (134) having the greater width on the side facing away from the transverse web (132) is a lateral web (136) which is provided with a lateral strip (137) projecting at an angle thereto yet parallel to the longitudinal web (133) having the lesser width (135).

33. Self-supporting box structure according to one or more of Claims 1 to 32, characterised in that a support part (138) is notched out of the lateral web (136) and the lateral strip (137) over a part of the length of the nodal reinforcing element (121), and is inwardly inclined in the direction of the transverse web (132) at an angle, so that a lateral strip part (139) abuts over its width on an underside of the shorter longitudinal web (133).

34. Self-supporting box structure according to one or more of Claims 1 to 33, characterised in that the lateral strip part (139) and the longitudinal web (133) with the smaller width (135) and the longitudinal web (134) are traversed by a bore (140) aligned perpendicular to their surface.

35. Self-supporting box structure according to one or more of Claims 1 to 34, characterised in that the horizontal support element (12) and/or the roof support panel (22) and/or the transverse support elements (16 to 18) and/or the vertical separating elements (26) are connected together by adhesive layers (128).

36. Self-supporting box structure according to one or more of Claims 1 to 35, characterised in that the horizontal support element (12) and/or the roof support panel (22) and/or the transverse support elements (16 to 18) and/or the vertical separating elements (26) are connected together by mechanical securing means (131), e.g. rivets or clamp screw connections.

37. Self-supporting box structure according to one or more of Claims 1 to 36, characterised in that a horizontal separating element (76) is disposed between the edge-wise lateral areas or webs (73) of two vertical separating elements (26) immediately adjacent to one another.

38. Self-supporting box structure according to one or more of Claims 1 to 37, characterised in that horizontal separating elements (76) are supported or guided between two transverse support elements (16 to 18) immediately adjacent to one another in or on the reinforcing elements (110, 144).

39. Self-supporting box structure according to one or more of Claims 1 to 38, characterised in that horizontal separating elements (76) which extend on either side of a transverse support element (16 to 18) in the direction of the further two transverse support elements (16 to 18), spaced apart therefrom are arranged at a varying distance from the horizontal support element (12).

40. Self-supporting box structure according to one or more of Claims 1 to 39, characterised in that the horizontal separating element (76) is a partition wall between an inner space of a tank chamber (65) and preferably a surface of the horizontal separating element (76) facing away from the inner space of the tank chamber (65), in the form of a compartment floor.

41. Self-supporting box structure according to one or more of Claims 1 to 40, characterised in that the horizontal separating elements (76) are provided with reinforcing elements (110, 144).

42. Self-supporting box structure according to one or more of Claims 1 to 41, characterised in that the horizontal separating elements (76) form compartment floors for pieces of equipment (77) or extinguishing substance.

43. Self-supporting box structure according to one or more of Claims 1 to 42, characterised in that, on the side of the transverse support elements (16 to 18) facing away from the horizontal support element (12) and parallel to said transverse support elements, there is arranged a preferably self-supporting roof support panel (22).

44. Self-supporting box structure according to one or more of Claims 1 to 43, characterised in that the longitudinal support element (24) is formed by a profiled sheet metal part (113) e.g. by a longitudinal, particularly longitudinal hollow profile, disposed in the longitudinal lateral area of the roof support panel (22).

45. Self-supporting box structure according to one or more of Claims 1 to 44, characterised in that the driver's cab (9) and the box structure (3) are connected to the vehicle frame (4) by mutually independent securing devices (176, 177).

46. Self-supporting box structure according to one or more of Claims 1 to 45, characterised in that, between the driver's cab (9), particularly its rear wall (79), and the box structure (3), particularly its end-face transverse support element (16) associated with the rear wall (79) of the drivers cabin (9), there are disposed a resiliently or elastoplastically deformable guiding and damping device (83) e.g. delimiting stops e.g. with a strongly progressive characteristic curve.

47. Self-supporting box structure according to one or more of Claims 1 to 46, characterised in that the surrounding resilient transitional and sealing element (41) is formed by a three-dimensionally deformable sleeve, e.g. a longitudinal profile (89).

48. Self-supporting box structure according to one or more of Claims 1 to 47, characterised in that the transitional and sealing element (41) is formed by a longitudinal profile (89) of resilient material, covering at least the roof support panel (22) and if necessary the side walls (38, 39) of a box structure (3), and securing lugs (91, 92), e.g. lateral strips, extending in the region of the longitudinal lateral edges, and defining a receiving slot (94), said strips serving to fix and retain the transitional and sealing element (41) on the driver's cab (9) and/or the transverse support elements (16) immediately adjacent thereto.

49. Self-supporting box structure according to one or more of Claims 1 to 48, characterised in that, between the driver's cab (9) and the box structure (3) particularly the transverse support element (16) immediately adjacent to the driver's cab (9), there is arranged a three-dimensional guiding and damping device (83) which is displaceable both in a direction perpendicular to the transverse support element (16) and also in a plane parallel to the transverse support element (16) against the restoring force of a spring element.

50. Self-supporting box structure according to one or more of Claims 1 to 49, characterised in that the guiding and damping device (83) comprises at least one guiding or damping element (84, 85) movably connected to the driver's cab (9), and one such movably connected to the box structure (3), one outer guiding or damping element (85) having a receiving opening (86) for the other inner guiding or damping element (84) and a cross-sectional shape of the inner guiding or damping element (84) being adapted to a cross-sectional shape of the receiving opening (86) of the outer guiding or damping element (85), and at least one of the two guiding or damping elements (84, 85) being formed from a resiliently deformable and restoring material, for example plastic or rubber or the like.

51. Self-supporting box structure according to one or more of Claims 1 to 50, characterised in that the receiving opening (86) is formed in the guiding or damping element (85) as a truncated cone with a cross-section tapering in the direction of its securing surface, and the inner guiding or damping element (84) having an identical or slightly smaller cross-section.

52. Self-supporting box structure according to one or more of Claims 1 to 51, characterised in that, between two transverse support elements (16, 17) disposed immediately adjacent to one another in the longitudinal direction of the box structure (3) there is arranged a crew cab (29) which is connected to the interior of the driver's cab (9) by an opening (81) in the end-face transverse support element (16) and a through opening (80) in the rear wall (79) of the driver's cab (9) and at least partially covering said opening (81).

53. Self-supporting box structure according to one or more of Claims 1 to 52, characterised in that doors (43) with boarding ladders (178) are arranged in the side walls (38, 39) of the crew cab (29).

54. Self-supporting box structure according to one or more of Claims 1 to 53, characterised in that the boarding ladder (178) is disposed in a cavity (47) extending over a length (20) of the arms (21) of the horizontal support element (12) in the direction of the support surface (19) inside the side wall (38, 39) of the box structure (3).

55. Self-supporting box structure according to one or more of Claims 1 to 54, characterised in that a diagonal support element (25) is formed by a nodal element, which has an arm length facing the transverse support element (16 to 18) and the longitudinal support element (24) of at least 300 mm.

56. Self-supporting box structure according to one or more of Claims 1 to 55, characterised in that, between the transverse support elements (16 to 18) and/or the vertical separating elements (26) and/or the horizontal separating elements (76) there are disposed shaped components (155 to 157), particularly three-dimensionally deformed sheet metal sections or components of glass-fibre-reinforced plastic.

57. Self-supporting box structure according to one or more of Claims 1 to 56, characterised in that the horizontal support element (12) comprises, in the longitudinal direction extending parallel to the end edges (123) between the base (54) and the arm (21), a plurality of components (129, 130), and in that these components (129, 130) are connected together preferably in the areas adjacent to the transverse support elements (16 to 18), and if necessary overlap one another.

58. Self-supporting box structure according to one or more of Claims 1 to 57, characterised in that a pivotal axis (51) for a pivotal compartment (50) is connected to an securing plate or a support profile (172) and the securing plate or the support profile (172) is connected in a plurality of spaced apart areas by securing means (131) to a transverse support element (16 to 18) or glued over its entire surface.

59. Self-supporting box structure according to one or more of Claims 1 to 58, characterised in that, in the region of the securing means (131), in particular in the countersunk guiding or reinforcing areas (32), there are arranged reinforcing elements (170) for receiving the securing means (131).

60. Self-supporting box structure according to one or more of Claims 1 to 59, characterised in that, in the region of the transverse support elements (16 to 18) and/or in the corner area between the transverse support elements (16 to 18) and the vertical separating elements (26), support profiles (172), particularly aluminium profiles and/or traversed or angled wall portions (169) of the transverse support elements (16 to 18) or vertical separating elements (26) are arranged, which are provided with receiving openings or retaining grooves (173) for receiving securing means (131) for pieces of equipment (77), particularly pivotal axes (51) of pivotal compartments (50).

## Revendications

1. Caisse monocoque pour des véhicules d'intervention, notamment de fourgons de pompiers pour recevoir des dispositifs de sauvetage et/ou d'extinction et le cas échéant de produits d'extinction et/ou de pompes pour produits d'extinction dans plusieurs caisses ou compartiments d'équipement accessibles de l'extérieur par différents agencements de porte, caractérisée en ce que la caisse monocoque (3) présente un élément de support horizontal (12) qui est réalisé dans un plan perpendiculaire à l'axe longitudinal du véhicule (11) suivant une section transversale essentiellement en U et, respectivement en forme de chapeau et sur lequel sont disposés, en direction de l'axe longitudinal du véhicule (11) à une distance (13 à 15) les uns des autres et perpendiculairement à celui-ci, au moins trois éléments de support transversaux (16 à 18) qui dépassent à partir d'une base (54) de l'élément de support horizontal (12) en direction d'une face d'appui (19), la base (54) de l'élément de support horizontal (12) d'une longueur (20).

2. Caisse monocoque selon la revendication 1, caractérisée en ce que l'élément de construction (129, 130) est réalisé en tant qu'élément de tôle en une couche en acier ou aluminium.

3. Caisse monocoque selon la revendication 1 ou 2, caractérisée en ce que l'élément de construction (129, 130) est formé par un élément sandwich (151) avec deux couches de recouvrement (152, 153) et un noyau (154) en matière synthétique et, respectivement mousse de matière synthétique et en une structure alvéolée, notamment une structure alvéolée en aluminium.

4. Caisse monocoque selon l'une ou plusieurs des revendications 1 à 3, caractérisée en ce que les éléments de support transversaux (16 à 18) sont reliés à un élément d'appui longitudinal (24) s'étendant sur la longueur de caisse (23), par exemple de l'élément de support horizontal (12) et/ou de la plaque de support formant toit (22) ou d'un autre élément de support transversal (17), par un élément d'appui diagonal (25) constitué par au moins une partie de profilé en tôle.

5. Caisse monocoque selon l'une ou plusieurs des revendications 1 à 4, caractérisée en ce qu'un élément de support transversal (16) côté frontal de la caisse (3) est disposé directement au voisinage d'une paroi arrière de la cabine de conduite (9) et parallèlement à celle-ci.

6. Caisse monocoque selon l'une ou plusieurs des revendications 1 à 5, caractérisée en ce qu'une forme en section transversale de la caisse (3) est adaptée au voisinage d'un élément de support transversal (16) côté frontal à une forme de section transversale de la cabine de conduite (9) orientée perpendiculairement à l'axe longitudinal de véhicule (11) et en ce qu'il est disposé entre la cabine de conduite (9) et la caisse (3), au voisinage des parois latérales (38, 39) et de la plaque de support de toit (22) et/ou l'élément de support transversal directement adjacent à celle-ci, un élément de liaison élastique s'étendant tout autour.

7. Caisse monocoque selon l'une ou plusieurs des revendications 1 à 6, caractérisée en ce que les éléments de support transversal (16 à 18) sont pourvus à leurs zones d'extrémité frontales orientées vers l'élément de support horizontal (12) et/ou la plaque de support de toit (22) d'éléments d'appui (141) et, respectivement de profilés d'appui (142) s'étendant angulairement à ceux-ci.

8. Caisse monocoque selon l'une ou plusieurs des revendications 1 à 7, caractérisée en ce qu'au moins un élément de support transversal (17) est pourvu d'un perçage (168), notamment d'une encoche, dont la partie de paroi (169) est chanfreinée suivant un angle d'environ 90° relativement à l'élément de support transversal (17), et qu'un élément de renforcement nodal (121) et respectivement un élément de renforcement (110, 144) passe à travers le perçage (168) et est relié par force et/ou par concordance des formes à l'élément de séparation vertical (26) des deux côtés d'au moins un élément de support transversal (17).

9. Caisse monocoque selon l'une ou plusieurs des revendications 1 à 8, caractérisée en ce que l'élément de support transversal (16 à 18) est pourvu d'un élément de renforcement (110, 144) s'étendant parallèlement à une face d'appui associée à l'élément de support horizontal (12).

10. Caisse monocoque selon l'une ou plusieurs des revendications 1 à 9, caractérisée en ce que les éléments de renforcement (110, 144) sont formés notamment par des pièces en tôle ou profilés chanfreinés en forme de profilé longitudinal.

11. Caisse monocoque selon l'une ou plusieurs des revendications 1 à 10, caractérisée en ce que les éléments de renforcement (110, 144) sont formés par des traverses et, respectivement moulures (145).

12. Caisse monocoque selon l'une ou plusieurs des revendications 1 à 11, caractérisée en ce qu'il est disposé de part et d'autre de l'essieu de véhicule arrière (7) et, respectivement des essieux arrière, respectivement un élément de support transversal (17) et en ce que sont disposés dans la direction de la cabine de conduite (9) au moins deux autres éléments de support transversal (16, 17) et dans la direction éloignée de la cabine de conduite (9) au moins un autre élément de support transversal (18) respectivement suivant un écartement (13 à 15) entre eux.

13. Caisse monocoque selon l'une ou plusieurs des revendications 1 à 12, caractérisée en ce que l'élément de support transversal arrière (18) présente une zone de réception, par exemple une nervure centrale (101) pour un volet arrière (147) qui est décalé perpendiculairement à l'élément de support transversal (18) dans la direction de conduite et qui est pourvu d'un perçage (150).

14. Caisse monocoque selon l'une ou plusieurs des revendications 1 à 13, caractérisée en ce que des baguettes de guidage (59) pour les arêtes frontales de volets (35) espacées dans la direction longitudinale du véhicule sont disposées sur les éléments de support transversal (16 à 18) directement avoisinants dans le sens de la marche sur les faces latérales orientées les unes vers les autres.

15. Caisse monocoque selon l'une ou plusieurs des revendications 1 à 14, caractérisée en ce que les éléments de support transversal (16 à 18) sont pourvus de zones de guidage et, respectivement de renforcement (32) verticales, traversées en forme de rainure, de préférence d'une section transversale en forme de U, s'étendant perpendiculairement à la base (54) et, respectivement parallèlement aux branches (21) de l'élément de support horizontal (12).

16. Caisse monocoque selon l'une ou plusieurs des revendications 1 à 15, caractérisée en ce que les zones de guidage et, respectivement de renforcement (32) en forme de rainure des éléments de support transversal (16 à 18) de deux éléments de support transversal (16 à 18) directement avoisinants dans la direction de l'axe longitudinal (11) du véhicule sont orientées l'une vers l'autre par leurs faces latérales (71, 72) faisant saillie de la face de base (70) ou par leur face de base (70) faisant saillie sur les éléments de support transversal (16 à 18).

17. Caisse monocoque selon l'une ou plusieurs des revendications 1 à 16, caractérisée en ce que l'élément de support transversal (16 à 18) est formé par une découpe en tôle plane chanfreinée à plusieurs reprises, et en ce que sont rapportés au moins dans des zones partielles, par exemple entre les zones de guidage ou de renforcement (32), des éléments d'appui (141) et, respectivement des prolongements (143) s'étendant angulaire à celui-ci.

18. Caisse monocoque selon l'une ou plusieurs des revendications 1 à 17, caractérisée en ce que des prolongements (143) disposés au voisinage des zones de guidage et, respectivement de renforcement (32) sont réalisés en une pièce avec la face de base (70) et sont chanfreinés, respectivement repliés dans la direction opposée aux faces latérales (71, 72).

19. Caisse monocoque selon l'une ou plusieurs des revendications 1 à 18, caractérisée en ce qu'un élément de séparation vertical en forme de plaque ou de profit (26) est disposé entre deux éléments de support transversal (16 à 18) et est relié à ceux-ci.

20. Caisse monocoque selon l'une ou plusieurs des revendications 1 à 19, caractérisée en ce qu'un élément de séparation vertical (26) s'engage dans les zones de guidage et, respectivement de renforcement (32) en forme de rainure par ses côtés frontaux et est guidé et, respectivement retenu dans celles-ci dans la direction. transversalement à l'axe longitudinal du véhicule (11) par les faces latérales (71, 72) et dans la direction longitudinale par la face de base (70) de celles-ci.

21. Caisse monocoque selon l'une ou plusieurs des revendications 1 à 20, caractérisée en ce que les éléments de séparation verticale (26) entre deux éléments de support vertical (16 à 18) s'étendent seulement sur une partie de la hauteur des éléments de support transversal (16 à 18) s'étendant à peu près perpendiculairement à une base (54) formant la plaque de fond.

22. Caisse monocoque selon l'une ou plusieurs des revendications 1 à 21, caractérisée en ce que l'élément de séparation verticale (26) est formé par une partie en tôle ou un élément sandwich (151) plan et, respectivement en forme de U ou de C.

23. Caisse monocoque selon l'une ou plusieurs des revendications 1 à 22, caractérisée en ce que l'élément de séparation verticale (26) est relié à des éléments de renforcement (110), par exemple des profilés d'une section transversale en forme de U ou de C ou en forme de chapeau.

24. Caisse monocoque selon l'une ou plusieurs des revendications 1 à 23, caractérisée en ce que les éléments de renforcement (144) sont formés par des traverses de préférence oblongues, de préférence des moulures (145) d'une section transversale par exemple en U ou en V ou en forme de trapèze.

25. Caisse monocoque selon l'une ou plusieurs des revendications 1 à 24, caractérisée en ce que les éléments de renforcement (114) des éléments de séparation verticale (26) sont orientés dans une direction s'étendant à peu près perpendiculairement aux éléments de support transversal (16 à 18).

26. Caisse monocoque selon l'une ou plusieurs des revendications 1 à 25, caractérisée en ce que des éléments de séparation verticale (26) disposés les uns au-dessus des autres dans la direction s'étendant perpendiculairement à l'élément de support horizontal (12) sont reliés par un élément de renforcement (114) orienté perpendiculairement à la surface de ceux-ci.

27. Caisse monocoque selon l'une ou plusieurs des revendications 1 à 26, caractérisée en ce que l'élément de renforcement (114) a une section transversale en forme de L et qu'une branche de l'élément de renforcement (114), par exemple les plaques d'appui (115) de celui-ci, est reliée de façon plane respectivement à une surface des éléments de séparation verticale avoisinants (26), notamment par une couche de colle (128).

28. Caisse monocoque selon l'une ou plusieurs des revendications 1 à 27, caractérisée en ce qu'il est disposé entre les deux plaques d'appui (115) reliées aux éléments de séparation verticale (26) un évidement (116) pour les zones de bord repliées vers le haut ou nervures (73) de celles-ci.

29. Caisse monocoque selon l'une ou plusieurs des revendications 1 à 28, caractérisée en ce que l'élément de support horizontal (12) est formé en section transversale de plusieurs parties individuelles (119, 120) reliées les unes aux autres, s'étendant parallèlement les unes aux autres.

30. Caisse monocoque selon l'une ou plusieurs des revendications 1 à 29, caractérisée en ce qu'il est disposé entre des parties individuelles (119, 120) s'étendant parallèlement l'une à l'autre dans la direction longitudinale de la caisse (3) ou au voisinage des arêtes frontales (123) entre la base (54) et les branches (21) de l'élément de support horizontal (12) un élément de renforcement nodal (121), par exemple un profilé longitudinal (122) d'une section transversale en forme de U ou de C ou en forme de profilé creux.

31. Caisse monocoque selon l'une ou plusieurs des revendications 1 à 30, caractérisée en ce que l'élément de renforcement nodal (121) est constitué d'un profilé longitudinal (122), par exemple d'un profilé creux, disposé respectivement au voisinage des deux arêtes frontales (123) entre la base (54) et la branche (21) de l'élément de support horizontal (12) et en ce que les profilés longitudinaux (122) sont reliés par force et/ou par concordance des formes dans leur direction longitudinale avec des supports transversaux (127) disposés à une certaine distance les uns des autres, s'étendant transversalement à la direction longitudinale de ceux-ci, et en ce que de préférence les profilés longitudinaux (122) sont en acier.

32. Caisse monocoque selon l'une ou plusieurs des revendications 1 à 31, caractérisée en ce que l'élément de renforcement nodal (121) présente deux nervures longitudinales (133, 134), parallèles l'une à l'autre, espacées l'une de l'autre en hauteur par une nervure transversale et qu'une des nervures longitudinales (133) a une largeur plus petite (135) que l'autre nervure longitudinale (134) et qu'à la nervure longitudinale (134) de plus grande largeur fait suite, au côté éloigné de la nervure transversale (132), une nervure latérale (136) pourvue d'une baguette de bord (137) angulaire relativement à celle-ci, cependant en saillie parallèlement à la nervure longitudinale (133) d'une plus petite largeur (135).

33. Caisse monocoque selon l'une ou plusieurs des revendications 1 à 32, caractérisée en ce qu'il est encoché, de la nervure latérale (136) et de la baguette de bord (137), sur une partie de la longueur de l'élément de renforcement nodal (121), une pièce d'appui (138) et qui est incliné dans la direction de la nervure transversale (132) suivant un angle vers l'intérieur de façon qu'une partie de baguette de bord (139) s'applique sur la largeur de celle-ci à un côté inférieur de la nervure longitudinale plus courte (133).

34. Caisse monocoque selon l'une ou plusieurs des revendications 1 à 33, caractérisée en ce que la partie de baguette de bord (139) ainsi que la nervure longitudinale (133) de la plus petite largeur (135), et la nervure longitudinale (134) sont traversées par un perçage (140) orienté perpendiculairement à leur surface.

35. Caisse monocoque selon l'une ou plusieurs des revendications 1 à 34, caractérisée en ce que l'élément de support horizontal (12) et/ou la plaque de support de toit (22) et/ou les éléments de support transversal (16 à 18) et/ou les éléments de séparation verticale (26) sont assemblés entre eux par des couches de colle (128).

36. Caisse monocoque selon l'une ou plusieurs des revendications 1 à 35, caractérisée en ce que l'élément de support horizontal (12) et/ou la plaque de support de toit (22) et/ou les éléments de support transversal (16 à 18) et/ou les éléments de séparation verticale (26) sont reliés entre eux par des moyens de fixation mécaniques (131), par exemple des rivets ou des assemblages par vis de serrage.

37. Caisse monocoque selon l'une ou plusieurs des revendications 1 à 36, caractérisée en ce qu'il est disposé un élément de séparation horizontal (76) entre les zones de bord repliées vers le haut et, respectivement les nervures (73) de deux éléments de séparation verticale directement avoisinants.

38. Caisse monocoque selon l'une ou plusieurs des revendications 1 à 37, caractérisée en ce que des éléments de séparation horizontale (76) prennent appui ou sont guidés entre deux éléments de support transversal (16 à 18) directement avoisinants ou sur les éléments de renforcement (110, 144).

39. Caisse monocoque selon l'une ou plusieurs des revendications 1 à 38, caractérisée en ce que des éléments de séparation horizontale (76) qui s'étendent de part et d'autre d'un élément de support transversal (16 à 18) en direction des deux autres éléments de support transversal (16 à 18) espacés de ceux-ci sont disposés suivant un écartement différent de l'élément de support horizontal (12).

40. Caisse monocoque selon l'une ou plusieurs des revendications 1 à 39, caractérisée en ce que l'élément de séparation horizontale (76) constitue une paroi de séparation qui est réalisée, comme fond d'étagère, entre un espace intérieur d'un réservoir (65) et, de préférence, une surface de l'élément de séparation horizontale (76) éloignée de l'espace intérieur du réservoir (65).

41. Caisse monocoque selon l'une ou plusieurs des revendications 1 à 40, caractérisée en ce que les éléments de séparation horizontale (76) sont pourvus d'éléments de renforcement (110, 144).

42. Caisse monocoque selon l'une ou plusieurs des revendications 1 à 41, caractérisée en ce que les éléments de séparation horizontale (76) forment des fonds d'étagère pour des objets d'équipements (77) et, respectivement des produits d'extinction.

43. Caisse monocoque selon l'une ou plusieurs des revendications 1 à 42, caractérisée en ce qu'il est disposé sur le côté frontal des éléments de support transversal (16 à 18) éloigné de l'élément de support horizontal (12), parallèlement à celui-ci, une plaque de support de toit (22) de préférence auto-porteuse.

44. Caisse monocoque selon l'une ou plusieurs des revendications 1 à 43, caractérisée en ce que l'élément de support longitudinal (24) est constitué d'une pièce profilée en tôle (113), par exemple d'un profilé longitudinal, notamment profilé longitudinal creux disposé dans la zone de bord latérale longitudinale de la plaque de support de toit (22).

45. Caisse monocoque selon l'une ou plusieurs des revendications 1 à 44, caractérisée en ce que la cabine de conduite (9) et la caisse (3) sont reliées par des dispositifs de fixation (176, 177) indépendants les uns des autres au châssis du véhicule.

46. Caisse monocoque selon l'une ou plusieurs des revendications 1 à 45, caractérisée en ce que sont disposés entre la cabine de conduite (9), notamment la paroi arrière (79) de celle-ci et la caisse (3), notamment l'élément de support transversal (16) côté frontal de celle-ci, orienté vers la paroi arrière (79) de la cabine de conduite (9), un dispositif de guidage et d'amortissement élastique ou déformable élastoplastiquement (83), par exemple des butées d'arrêt, avec, par exemple une courbe caractéristique des ressorts très progressive.

47. Caisse monocoque selon l'une ou plusieurs des revendications 1 à 46, caractérisée en ce que l'élément de transition et d'étanchéité élastique s'étendant tout autour est formé par une douille déformable spatialement, par exemple un profilé longitudinal (89).

48. Caisse monocoque selon l'une ou plusieurs des revendications 1 à 47, caractérisée en ce que l'élément de transition et d'étanchéité (41) est formé par un profilé longitudinal (89) en matière élastique recouvrant au moins la plaque de support de toit (22) et, le cas échéant, les parois latérales (38, 39) d'une caisse (3), et que sont disposées des languettes de fixation (91, 92), par exemple des baguettes de bord s'étendant au voisinage des arêtes latérales longitudinales, délimintant une fente de réception (94), pour fixer et retenir l'élément de transition et d'étanchéité (41) sur la cabine de conduite (9) et/ou l'élément de support transversal (16) avoisinant directement celle-ci.

49. Caisse monocoque selon l'une ou plusieurs' des revendications 1 à 48, caractérisée en ce qu'il est disposé entre la cabine de conduite (9) et la caisse (3), notamment l'élément de support transversal (16) avoisinant directement la cabine de conduite (9) un dispositif de guidage et d'amortissement spatial (83) qui est réglable à la fois dans la direction perpendiculairement à l'élément de support transversal (16) et dans un plan parallèle à l'élément de support transversal (16) contre la force de rappel d'un élément de ressort.

50. Caisse monocoque selon l'une ou plusieurs des revendications 1 à 49, caractérisée en ce que le dispositif de guidage et d'amortissement (83) est constitué d'au moins un élément de guidage et d'amortissement (84, 85) lié, quant à son mouvement, à la cabine de conduite (9) et à la caisse (3), un élément de guidage et d'amortissement extérieur (85) présentant une ouverture de réception (86) pour l'autre élément de guidage et d'amortissement intérieur (84) et où une forme en section transversale de l'élément de guidage et d'amortissement intérieur (84) est adapté à une forme en section transversale de l'ouverture de réception (86) de l'élément de guidage et d'amortissement extérieur (85), et au moins l'un des deux éléments de guidage et d'amortissement (84, 85) étant réalisé en une matière élastiquement déformable et apte à être rappelée, par exemple en matière synthétique ou en caoutchouc ou analogue.

51. Caisse monocoque selon l'une ou plusieurs des revendications 1 à 50, caractérisée en ce que l'ouverture de réception (86) dans l'élément de guidage et, respectivement d'amortissement (85) est réalisée sous forme de cône tronqué avec une section transversale diminuant en direction de sa face de fixation, et l'élément de guidage et d'amortissement intérieur (84) ayant une section transversale identique ou légèrement plus petite.

52. Caisse monocoque selon l'une ou plusieurs des revendications 1 à 51, caractérisée en ce qu'il est disposée entre deux éléments de support transversal (16, 18) directement avoisinant dans la direction longitudinale de la caisse (3) une cabine pour l'équipage (29) qui est reliée par une ouverture (81) dans l'élément de support transversal côté frontal (16) et une ouverture de passage recouvrant celle-ci au moins partiellement dans la paroi arrière (79) de la cabine de conduite (9) à l'espace intérieur de la cabine de conduite (9).

53. Caisse monocoque selon l'une ou plusieurs des revendications 1 à 52, caractérisée en ce que des portes (43) avec des escaliers de montée (178) sont disposées dans les parois latérales (38, 39) de la cabine pour l'équipage (29).

54. Caisse monocoque selon l'une ou plusieurs des revendications 1 à 53, caractérisée en ce que l'escalier de montée (178) est disposé dans un espace en profondeur (47) s'étendant sur une longueur (20) des branches (21) de l'élément de support horizontal (12) en direction de la face d'appui (19), à l'intérieur de la paroi latérale (38, 39) de la caisse (3).

55. Caisse monocoque selon l'une ou plusieurs des revendications 1 à 54, caractérisée en ce qu'un élément d'appui diagonal (25) est formé par un élément nodal qui a une longueur de branche orientée vers l'élément de support transversal (16 à 18) et l'élément d'appui longitudinal (24) d'au moins 300 mm.

56. Caisse monocoque selon l'une ou plusieurs des revendications 1 à 55, caractérisée en ce que sont disposés entre les éléments de support transversal (16 à 18) et/ou les éléments de séparation verticale (26) et/ou les éléments de séparation horizontale (76), des éléments de construction formés (155 à 157), notamment des découpes en tôle déformées spatialement ou des éléments de construction en matière synthétique renforcée par des fibres de verre.

57. Caisse monocoque selon l'une ou plusieurs des revendications 1 à 56, caractérisée en ce que l'élément de support horizontal (12) est constitué dans la direction longitudinale s'étendant parallèlement aux arêtes frontales (123) entre la base (54) et les branches (21) de plusieurs éléments de construction (129, 130), et que ces éléments de construction (129, 130) sont reliés de préférence dans les zones avoisinant les éléments de support transversal (16 à 18) et se recouvrent le cas échéant.

58. Caisse monocoque selon l'une ou plusieurs des revendications 1 à 57, caractérisée en ce qu'un axe de pivotement (51) pour une case pivotante (50) est relié à une plaque de fixation et, respectivement un profil de support (172) et que la plaque de fixation et, respectivement le profil de support (172) est relié dans plusieurs zones espacées les unes des autres par des moyens de fixation (131) à un élément de support transversal (16 à 18) ou est assemblé par collage sur toute sa surface avec celui-ci.

59. Caisse monocoque selon l'une ou plusieurs des revendications 1 à 58, caractérisée en ce que sont disposés au voisinage des moyens de fixation (131), notamment dans les zones de guidage et de renforcement noyées (32), des éléments de renforcement (170) pour recevoir les moyens de fixation (131).

60. Caisse monocoque selon l'une ou plusieurs des revendications 1 à 59, caractérisée en ce que sont disposés au voisinage des éléments de support transversal (16 à 18) et/ou dans la zone angulaire entre les éléments de support transversal (16 à 18) et les éléments de séparation verticale (26) des profilés de support (172), notamment des profilés en aluminium et/ou des parties de paroi traversantes ou chanfreinées (169) des éléments de support transversal (16 à 18) ou éléments de séparation verticale (26) qui sont pourvus d'ouvertures de réception et, respectivement de rainures de retenue (173) pour recevoir des moyens de fixation (131) pour des objets d'équipement (77), notamment des axes de pivotement (51) de cases pivotantes (50).
